(19) Europäisches Patentamt
European Patent Office
Office européen des brevets

(11) **EP 4 760 354 A1**

(12) **EUROPEAN PATENT APPLICATION**
published in accordance with Art. 153(4) EPC

(43) Date of publication:
**17.06.2026 Bulletin 2026/25**

(21) Application number: **24851772.4**

(22) Date of filing: **02.08.2024**

(51) International Patent Classification (IPC):
***G01S 17/894*** (2020.01)

(52) Cooperative Patent Classification (CPC):
**G01S 17/894**

(86) International application number:
**PCT/JP2024/027735**

(87) International publication number:
**WO 2025/033347 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 JP 2023129765**

(71) Applicant: **Toppan Holdings Inc.**
**Tokyo 110-0016 (JP)**

(72) Inventors:
• **SHIRAKAWA, Yuya**
**Tokyo 110-0016 (JP)**
• **HARIU, Hiromitsu**
**Tokyo 110-0016 (JP)**

(74) Representative: **Plasseraud IP**
**104 Rue de Richelieu**
**CS92104**
**75080 Paris Cedex 02 (FR)**

(54) **DISTANCE IMAGE CAPTURING DEVICE, AND DISTANCE IMAGE CAPTURING METHOD**

(57) There are provided a light source unit, a light receiving unit provided with pixels with a plurality of charge storage elements and a pixel drive unit, and a range image processing unit controls the pixel drive circuit to store the charge in each of the charge storage elements and calculate a distance to the subject based on amounts of the charge stored in the charge storage elements. The range image processing unit stores the charge in each of the charge storage elements based on a plurality of drive patterns, and performs processing such that, in the charge storage elements in which the charge is stored in accordance with the plurality of drive patterns, the charge storage elements whose storage delay time is smaller become smaller in the number of light receptions than the charge storage elements whose storage delay time is larger. The number of light receptions is the number of times the charge is stored into the charge storage elements during a reflected light reception interval from the irradiation timing to a timing at which a reflected light reception time elapses.

FIG.1

EP 4 760 354 A1

**Description**

Technical Field

The present invention relates to a range imaging device and a range imaging method.
The present application is based on and claims the benefits of priorities from Japanese Patent Application No. 2023-129765 filed in Japan on Aug. 9, 2023, the contents of which are incorporated herein by reference.

Background Art

Range imaging devices utilizing time-of-flight (TOF) methods have been realized. These methods measure the distance between a measuring device and a subject, based on the flight time of light in the space (measurement space), taking advantage of the known speed of light (see, for example, Patent Document 1).

Citation List

Patent Literature

[PTL 1] JP 4235729 B

Summary of the Invention

Problem to be Solved by the Invention

When simultaneously measuring a near-range object and a far-range object using such a range imaging device, the reflected light arriving from the near-range object is received at a higher intensity than the reflected light arriving from the far-range object. In such cases, multiple reflections known as flare phenomena may occur within optical systems such as lenses. When such a flare phenomenon occurs, reflected light from nearby objects overlaps with reflected light from distant objects at the pixels which receive the light from the distant objects, making it difficult to accurately measure the distance to distant objects. As means for suppressing this flare phenomenon, applying special processing to the lens to make it less prone to flare is a possible approach, though this may increase manufacturing costs.
The present invention has been developed based on the above issues and aims to provide a range imaging device and a range imaging method that can suppress flare phenomena without increasing manufacturing costs.

Solution to Problems

A range imaging device according to the present invention, comprising: a light source unit irradiating a light pulse to a subject; a light receiving unit comprising pixels and a pixel drive circuit, the pixels including photoelectric conversion elements configured to generate charge depending on incident light and a plurality of charge storage elements each storing the charge, the pixel drive circuit configured to distribute and store the charge in each of the charge storage elements at a storage timing which is synchronized with an irradiation timing at which the light pulse is irradiated; and a range image processing unit configured to control the pixel drive circuit to store the charged in each of the charge storage elements and calculate a distance to the subject based on amounts of the charges stored in each of the charge storage elements, wherein the range image processing unit is configured to store the charge in each of the charge storage elements based on a plurality of drive patterns, the charge storage elements storing the charge therein being different in number from each other among the drive patterns, and perform processing such that, in the charge storage elements in which the charge is stored in accordance with the plurality of drive patterns, the charge storing elements whose storage delay time is smaller becoming smaller in the number of light receptions than the charge storage elements whose storage delay time is larger, the storage delay time being a difference between the irradiation timing and the storage timing, wherein the number of light receptions is the number of times of storing the charge into the charge storage elements during a reflected light reception interval from the irradiation timing to timing at whicha reflected light reception time elapses, the reflected light reception time being a time corresponding to a measurable distance.
A range imaging method according to the present invention, which is performed by a range imaging device comprising: a light source unit irradiating a light pulse to a subject; a light receiving unit comprising pixels and a pixel drive circuit, the pixels including photoelectric conversion elements configured to generate charge depending on incident light and a plurality of charge storage elements each storing the charge, the pixel drive circuit configured to distribute and store the charge in each of the charge storage elements at a storage timing which is synchronized with an irradiation timing at which the light pulse is irradiated; and a range image processing unit configured to control the pixel drive circuit to store the charge in each of the charge storage elements and calculate a distance to the subject based on amounts of the charge stored in each of the charge storage elements, wherein the range image processing unit stores the charge in each of the charge storage elements based on a plurality of drive patterns, the charge storage elements storing the charge therein being different in number from each other among the drive patterns, and performs processing such that, in the charge storage elements in which the charge is stored in accordance with the plurality of drive patterns, the charge storage elements whose storage delay time is smaller becoming smaller in the number of light receptions than the charge storage elements whose storage delay time is larger, the storage delay time being a difference between the irradiation timing and the storage timing, wherein the number of light receptions is the number of times of storing the charge into the charge storage elements during a reflected light reception interval from the irradiation timing to timing at which a reflected light reception time elapses, the reflected light reception time being a time corresponding to a measurable distance.

Advantageous Effect of the Invention

According to the present invention, the flare phenomena can be suppressed without increasing manufacturing costs.

Brief Description of Drawings

Fig. 1 is a block diagram outlining the configuration of a range imaging device 1 according to an embodiment.

Fig. 2 is a block diagram outlining the configuration of a range image sensor 32 according to the embodiment.

Fig. 3 is a circuit diagram exemplifying the configurations of pixels 321 employed by the embodiment.

Fig. 4 is a graph explaining frame periods employed by the embodiments.

Fig. 5 is a graph explaining frame periods employed by the embodiment.

Fig. 6A is a graph explaining frame periods employed by the embodiment.

Fig. 6B is a graph explaining frame periods employed by the embodiment.

Fig. 6C is a graph explaining frame periods employed by the embodiment.

Fig. 7A is a graph explaining frame periods employed by the embodiment.

Fig. 7B is a graph explaining frame periods employed by the embodiment.

Fig. 8 is a flowchart showing a process performed by the range imaging device 1 according to the embodiment.

Description of the Embodiments

A range imaging device according to an embodiment will now be described with reference to the accompanying drawings.

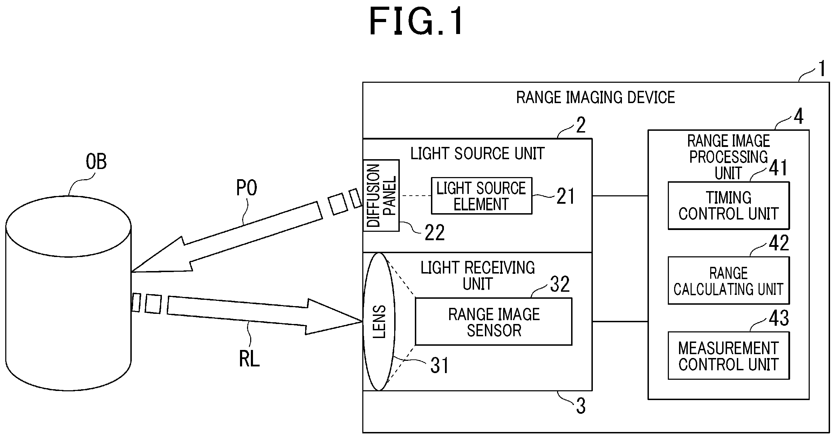

Fig. 1 is a block diagram showing an outlined configuration of a range image capturing device according to the embodiment. The range imaging device 1 is provided with, for example, a light source unit 2, a light receiving unit 3, and a distance image processing unit 4. Fig. 1 also shows a subject OB, which is an object whose distance is measured by a range imaging device 1.
The light source unit 2 irradiates a light pulse PO into the space, i.e., a measurement target, where a subject OB exists, in accordance with control from the range image processing unit 4. The light source unit 2 is a surface-emitting semiconductor laser module, such as a vertical cavity surface-emitting laser (VCSEL). The light source unit 2 is provided with a light source element 21 and a diffusion panel 22.
The light source element 21 is a light source that emits laser light in the near-infrared wavelength band (e.g., the wavelength band of 850 nm to 940 nm) that becomes the light pulse PO irradiated onto the subject OB. The light source element 21 is, for example, a semiconductor laser emitter. The light source element 21 is configured to emit pulsed laser light in response to control from a timing control unit 41.

The diffusion panel 22 is an optical component that diffuses the near-infrared laser light, which is emitted by the light source element 21, across a wide surface area to irradiate the subject OB. The pulsed laser light diffused by the diffusion panel 22 is emitted as the light pulse PO and irradiates the subject OB.

The light receiving unit 3 receives the reflected light RL of the light pulse PO reflected by the subject OB, which is an object whose distance is to be measured by the range imaging device 1, and outputs a pixel signal corresponding to the received reflected light RL. The light receiving unit 3 is equipped with a lens 31 and a range image sensor 32.

The Lens 31 is an optical lens that guides the incident reflected light RL to the range image sensor 32. The lens 31 transmits the incident reflected light RL toward the range image sensor 32, causing it to be received (incident) onto the pixels provided in the light-receiving area of the range image sensor 32.

The range image sensor 32 is an imaging element used in the range imaging device 1. The range image sensor 32 is equipped with a plurality of pixels arranged in a two-dimensional matrix. Within each of the pixels of the range image sensor 32, one photoelectric conversion element is provided, along with multiple charge storage elements for this single photoelectric conversion element, and components for distributing charge to each charge storage element. In other words, the pixels are provided as an imaging element with a distribution configuration that distributes and storage charge across multiple charge storage elements.

The range image sensor 32 is configured to distribute the charge generated by the photoelectric conversion element to each charge storage element in response to control from the timing control unit 41. In addition, the range image sensor 32 is also configured to output a pixel signal depending on the amount of charge distributed to the charge storage elements. The range image sensor 32 has multiple pixels arranged in a two-dimensional matrix, and outputs pixel signals corresponding to one frame for each pixel.

The range image processing unit 4 controls the range imaging device 1 and calculates a distance to the subject OB. The range image processing unit 4 is equipped with a timing control unit 41, a range calculating unit 42, and a measurement control unit 43.

The timing control unit 41 controls the timing of outputting various control signals required for measurement in response to control issued from the measurement control unit 43. In the present embodiment, the various control signals include, for example, signals controlling the irradiation of the optical pulse PO, signals distributing and storing the reflected light RL across the multiple charge storage elements, and signals controlling the number of accumulation times per frame. The number of accumulation times refers to the number of times the process of distributing and storing charge in the charge storage elements is repeated per process (e.g., per one frame or per one subframe).

The range calculating unit 42 calculates a distance to the subject OB based on the pixel signals outputted from the range image sensor 32 and outputs the calculated distance. The range calculating unit 42 also calculates a delay time from emitting the light pulse PO to receiving the reflected light RL based on the amount of charge stored in the plurality of charge storage elements, and calculates a distance to the subject OB according to the calculated delay time.

The measurement control unit 43 controls the timing control unit 41. For example, the measurement control unit 43 sets parameters, such as the number of accumulation times per frame, and controls the timing control unit 41 to ensure that the imaging is performed according to the set parameters.

With this configuration, in the range imaging device 1, the light source unit 2 irradiates the subject OB with light pulses PO in the near-infrared wavelength band, the light receiving unit 3 then receives the reflected light RL emitted by the subject OB, and the range image processing unit 4 measures a distance to the subject OB and outputs distance information showing the measured distance.

Fig. 1 shows a range imaging device 1 configured with a range image processing unit 4 inside the range imaging device 1. However, the distance image processing unit 4 may also be configured as an external component of the range imaging device 1.

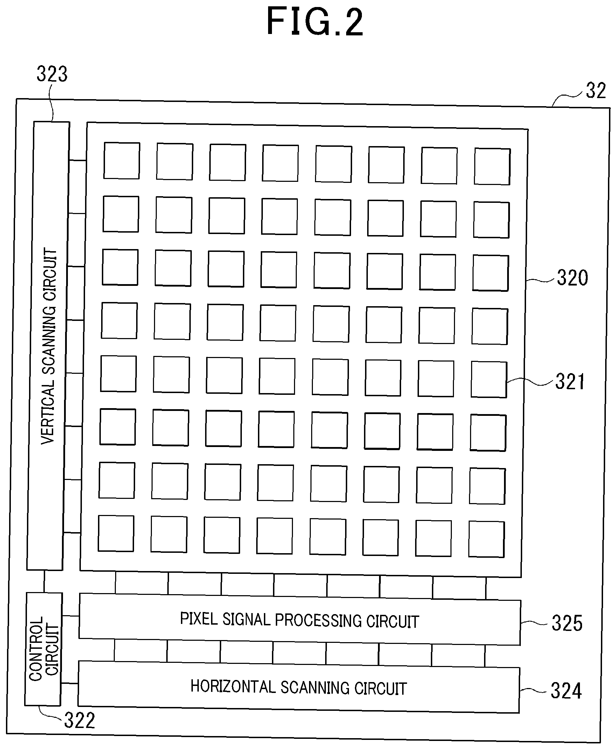

With reference to Fig. 2, the configuration of the range image sensor 32 will now be described. Fig. 2 is a block diagram showing the schematic configuration of the imaging element (i.e., a range image sensor 32) used in the range imaging device 1 of the present embodiment.

As shown in Fig. 2, the range image sensor 32 is equipped with, for example, a light-receiving area 320 with multiple pixels 321 arranged therein, a control circuit 322, a vertical scanning circuit 323 which performs distribution operations, a horizontal scanning circuit 324, and a pixel signal processing circuit 325.

The light-receiving area 320 is an area where multiple pixels 321 are arranged. Fig. 2 shows an example where the pixels are arranged in a two-dimensional matrix with 8 rows and 8 columns. Each of the pixels 321 stores an amount of charge corresponding to the amount of light it receives. The control circuit 322 comprehensively controls the range image sensor 32. The control circuit 322 controls the operations of the components of the range image sensor 32, for example, in response to instructions from the timing control unit 41 of the range image processing unit 4. The control of the components provided in the range image sensor 32 may also be performed directly by the timing control unit 41. In that direct control, the control circuit 322 can be omitted.

The vertical scanning circuit 323 is a circuit that controls the pixels 321 arranged in the light-receiving area 320 row by row in response to control from the control circuit 322. The vertical scanning circuit 323 outputs a voltage signal corresponding to the amount of charge stored in each charge storage element CS of the pixels 321 to the pixel signal processing circuit 325. For example, the vertical scanning circuit 323 distributes and stores the charge converted by the photoelectric conversion element to each charge storage element of the pixels 321 at a storage timing synchronized with the irradiation of the light pulse PO. Furthermore, the vertical scanning circuit 323 discharges the charge converted by the photoelectric conversion element from the charge discharge component (i.e., a drain gate transistor GD described later) at a timing different from the storage timing. In the present embodiment, the vertical scanning circuit 323 is an example of a "pixel drive circuit".

The pixel signal processing circuit 325 is a circuit that performs predetermined signal processing (e.g., noise suppression processing or A/D conversion processing) on the voltage signals outputted from the pixels 321 of each column to the corresponding vertical signal lines, in response to control from the control circuit 322.

The horizontal scanning circuit 324 is a circuit that sequentially outputs signals from the pixel signal processing circuit 325 to the horizontal signal lines in response to control from the control circuit 322. This causes pixel signals corresponding to the charge amounts stored for one frame to be sequentially outputted to the range image processing unit 4 via the horizontal signal lines.

The following description assumes that the pixel signal processing circuit 325 performs A/D conversion processing and that the pixel signals are outputted as digital signals.

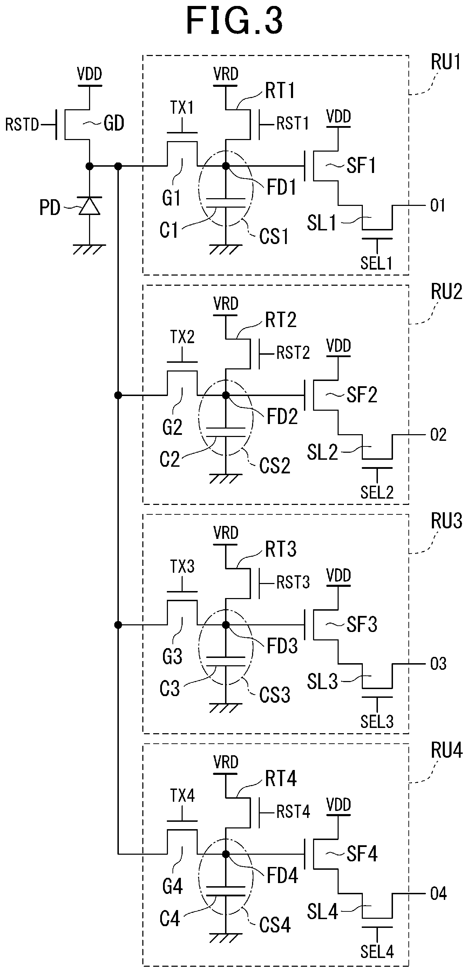

Fig. 3 is used to describe the configuration of a pixel 321. Fig. 3 is a circuit diagram exemplifying a configuration of the pixel 321 arranged within the light-receiving area 320 of the range image sensor 32 according to the present embodiment. Fig. 3 exemplifies a configuration of the single pixel 321, which is one of a plurality of pixels 321 arranged within the light-receiving area 320. The pixel 321 exemplifies a pixel whose configuration is equipped with four pixel signal readout circuits.

The pixel 321 is provided with a one photoelectric conversion element PD, a drain gate transistor GD, and four pixel signal readout circuits RU that output voltage signals from each corresponding output terminals O. Each of the pixel signal readout circuits RU is provided with a readout gate transistor G, a floating diffusion FD, a charge storage capacitance C, a reset gate transistor RT, a source follower gate transistor SF, and a select gate transistor SL. Each of the pixel signal readout circuits RU is provided with a charge storage element CS which is formed by the floating diffusion FD and the charge storage capacitance C.

In Fig. 3, the respective pixel signal readout circuits RU are distinguished from each other by appending one of the numbers "1" to '4' after the symbol "RU". Similarly, each of the components provided in the four pixel signal readout circuits RU is also distinguished from each other and represented by indicating the number representing the respective pixel signal readout circuit RU after the symbol.

In the pixel 321 shown in Fig. 3, the pixel signal readout circuit RU1, which outputs a voltage signal from the output terminal O1, includes a readout gate transistor G1, a floating diffusion FD1, a charge storage capacitance C1, a reset gate transistor RT1, a source follower gate transistor SF1, and a selection gate transistor SL1. In the pixel signal readout circuits RU1, the charge storage element CS1 is formed by the floating diffusion FD1 and the charge storage capacitance C1. The remaining pixel signal readout circuits RU2 to RU4 have the same configuration as the foregoing pixel signal readout circuits RU1.

The photoelectric conversion element PD is an embedded photodiode that generates charge by photoelectric conversion of incident light and stores the generated charge therein. The structure of the photoelectric conversion element PD may be arbitrary in its design. The photoelectric conversion element PD may, for example, be a PN photodiode with a structure where a p-type semiconductor is joined to an n-type semiconductor, or it may be a PIN photodiode with a structure where an I-type semiconductor is sandwiched between a p-type semiconductor and an n-type semiconductor. Moreover, the photoelectric conversion element PD is not limited to a photodiode, but, for example, may be provided as a photoelectric conversion element structured using a photogate method.

In the pixel 321, the photoelectric conversion element PD photoelectrically converts incident light to generate charge, which is then distributed to each of the four charge storage elements CS, and voltage signals corresponding to the amounts of charges distributed to each of the elements are outputted to the pixel signal processing circuit 325.

The configuration of the pixels arranged in the range image sensor 32 is not limited to the configuration shown in Fig. 3, which includes the four pixel signal readout circuits RU, but may include any pixel configuration equipped with multiple pixel signal readout circuits RU. That is, the number of pixel signal readout circuits RU (i.e., the number of charge storage element CS) provided in the respective pixels arranged in the range image sensor 32 may be two, three, or five or more.

Furthermore, in the pixel 321 shown in the configuration of Fig. 3, an example is shown where the charge storage element CS is equipped with the floating diffusion FD and the charge storage capacitance C. However, the charge storage element CS needs only be formed by at least the floating diffusion FD, and in such a configuration, the pixel 321 may be configured without the charge storage capacitance C.

Furthermore, while the pixel 321 shown in Fig. 3 illustrates an example configuration including the drain gate transistor GD, a configuration without such a drain gate transistor GD may be used when it is not necessary to discharge the charge stored (remaining) in the photoelectric conversion element PD. The drain gate transistor GD is provided as an example of a "charge discharge component".

When performing measurements with the range imaging device 1, flare phenomena may occur, for example, when simultaneously measuring objects at closer ranges (closer-range objects) and objects at farther ranges (farther-range objects). In a case where this flare phenomenon occurs, the reflected light RL arriving from the distant object is superimposed on the pixel 321 receiving the reflected light RL arriving from the near object, making it difficult to accurately measure the distance to the distant object.

As a countermeasure against this problem, in the present embodiment, multiple drive patterns are set such that the time (i.e., exposure time) for receiving reflected light RL arriving from closer-range objects becomes shorter compared to the time for receiving reflected light RL arriving from farther-range objects. Specifically, when driving using the multiple drive patterns to store charge in the charge storage elements CS, the charge storage elements CS with smaller storage delay times receive fewer light receptions than the charge storage elements CS with larger storage delay times.

The storage delay time is the difference between the irradiation timing and the storage timing. The irradiation timing is the timing at which the light pulse PO begins irradiation. The storage timing is the timing at which the operation to store charge in the charge storage element CS begins (by turning the readout gate transistor G on). A charge storage element CS with a smaller storage delay time stores charge corresponding to reflected light RL arriving from closer-range objects. A charge storage element CS with a larger storage delay time stores charge corresponding to reflected light RL arriving from farther-range objects.

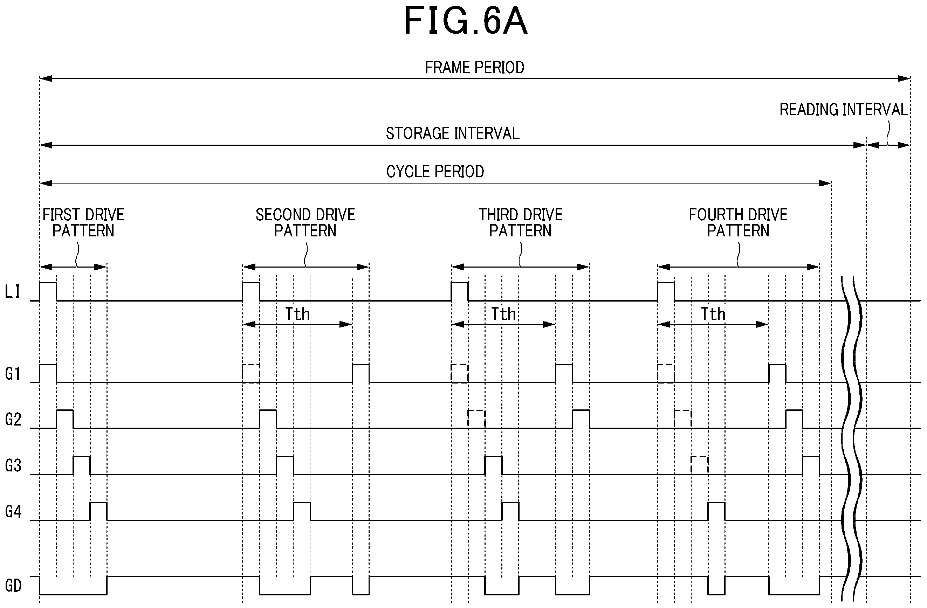

The number of light receptions is the number of times reflected light RL can be received. The number of light receptions is the number of times charge is stored in the charge storage element CS during the period from irradiation timing to the passage of the reflected light reception time Tth (see Figure 6A, etc.). The period from irradiation timing to the elapsed time of reflected light reception time Tth is also referred to as the reflected light reception interval. A reflected light reception time Tth is the time assumed for receiving reflected light RL after a light pulse PO has been irradiated. The reflected light reception time Tth is arbitrarily determined according to the distance measurable by the range imaging device 1. If charge is stored in the charge storage element CS after the time Tth has elapsed from the irradiation timing, the charge storage element CS will not store charge corresponding to the reflected light RL; only charge corresponding to the external light will be stored.

Thus, in the present embodiment, the pixels 321 are driven such that the time (i.e., exposure time) for receiving the reflected light RL arriving from closer-range objects is reduced. This reduces the number of times pixel 321, which receives the reflected light RL from farther-range objects, receives the reflected light RL from closer-range objects. Consequently, it becomes possible to more accurately measure distances to farther-range objects.

The following description illustrates an example where multiple drive patterns (first drive pattern to fourth drive pattern) are driven within a single frame. However, this is not limited to this example. Multiple frames may be used, with multiple drive patterns driven for each frame. Multiple frames may be used, with multiple drive patterns driven within each frame.

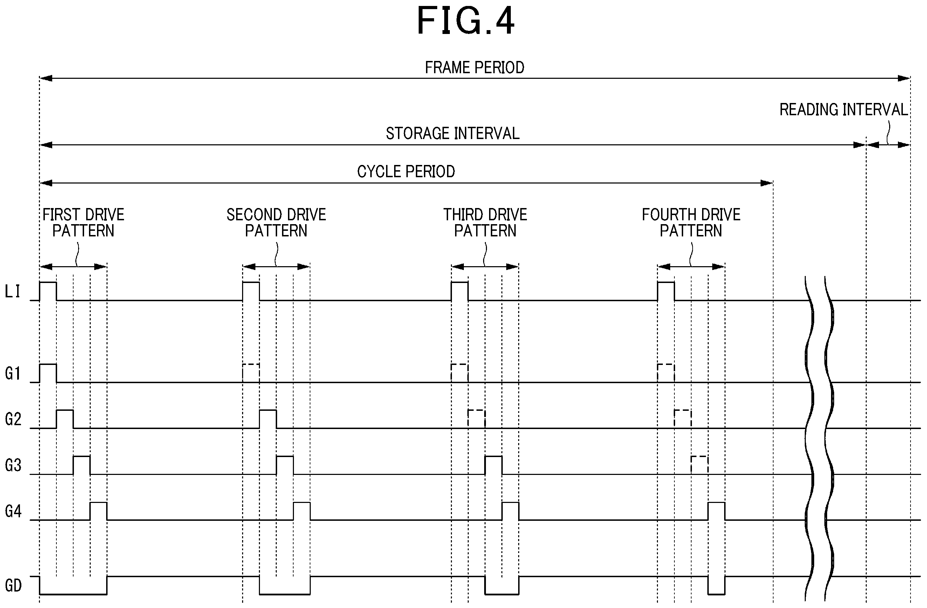

With reference to Fig. 4, an example of the frame period used in the present embodiment will now be described. Fig. 4 is a diagram illustrating the frame period according to the present embodiment.

This diagram shows a timing chart for the elements corresponding to each of "LI", "G1" to "G4", and 'GD'. "LI" indicates the irradiation timing of the optical pulse PO. When in the ON state thereof, the light pulse is irradiated, while when in the OFF state thereof, the light pulse is not irradiated. "G1" to 'G4' show the storage timing for the readout gate transistors G1 to G4. When in the ON state thereof, charge stores, while when in the OFF state thereof, charge does not store. Moreover, "GD" shows the drive timing for the drain gate transistor GD. When in the ON state thereof, charge is discharged, while when in the OFF state thereof, the charge is not discharged.

As shown in Fig. 4, the frame period includes, for example, a storage interval and a reading interval. During the storage interval, the cycle period is repeated a predetermined number of accumulation times N. During the cycle period, the operations for the light irradiation, charge storage, and signal readout are performed with the drive patterns corresponding to the first to fourth drive patterns.

The first drive pattern shown in Fig.4 is the reference drive pattern which sequentially stores charge in all the four charge storage elements CS during the storage timings synchronized with the irradiation timings. In the first drive pattern, the drain gate transistor GD is turned off at the same timing as the irradiation timing when the light pulse PO is irradiated, and the readout gate transistors G1 to G4 are turned on sequentially.

Specifically, in the first drive pattern, the timing control unit 41 performs control via the control circuit 322 such that the timing control unit 41 turns the drain gate transistor GD off at the irradiation timing while turning the readout gate transistor G1 on. After turning the readout gate transistor G1 on, the readout gate transistor G1 is turned off, when a specific storage time To (e.g., the same duration as the irradiation time when the light pulse PO was applied) has elapsed. At the timing when the readout gate transistor G1 is turned off, the readout gate transistor G2 is turned on. After the readout gate transistor G2 has been turned on, the readout gate transistor G2 is turned off when the storage time To has elapsed. At the timing when the readout gate transistor G2 is turned off, the readout gate transistor G3 is turned on. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed.

As a result, while each of the readout gate transistors G1 to G4 is controlled to be in the ON state, the charge photoelectrically converted by the photoelectric conversion element PD is stored in the charge storage elements CS1 to CS4. Then, at the timing when the readout gate transistor G4 is turned off, the drain gate transistor GD is turned on to discharge the charges. Thus, the charge photoelectrically converted by the photoelectric conversion element PD is discarded via the drain gate transistor GD. In the first drive pattern, this drive, which sequentially stores charges in the charge storage elements CS1 to CS4, is executed repeatedly a predetermined number of accumulation times N.

The second drive pattern shown in Fig. 4 is a drive pattern where the storage timing for each of the readout gate transistors G1 to G4 relative to the irradiation timing is the same as in the first drive pattern, and the readout gate transistor G1 is not turned on. That is, the second drive pattern is one that does not store charge in the charge storage element CS1 corresponding to the readout gate transistor G1, compared to the first drive pattern. In the second drive pattern, this drive, which sequentially stores charge in the charge storage elements CS2 to CS4, is executed repeatedly a predetermined number of accumulation times N.

Specifically, in the second drive pattern, the timing control unit 41 performs control via the control circuit 322 such that the timing control unit 41 turns the drain gate transistor GD off and turns the readout gate transistor G2 on after the storage time To has elapsed from the irradiation timing. After the readout gate transistor G2 has been turned on, the readout gate transistor G2 is turned off when the storage time To has elapsed. At the timing when the readout gate transistor G2 is turned off, the readout gate transistor G3 is turned on. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed.

The third drive pattern in Fig. 4 is a drive pattern where the storage timing for each of the readout gate transistors G1 to G4 relative to the irradiation timing is the same as that in the first drive pattern, and the readout gate transistors G1 and G2 are not turned on. That is, the third drive pattern is a drive pattern that does not store charge in the charge storage elements CS1 and CS2 corresponding to the readout gate transistors G1 and G2, respectively, compared to the first drive pattern. In the third drive pattern, this drive that sequentially stores charges in charge storage elements CS3 to CS4 is defined as the third storage interval. The drive corresponding to the third storage interval is then repeated a predetermined number of accumulation times N.

Specifically, in the third drive pattern, the timing control unit 41 performs control via the control circuit 322 such that the timing control unit 41 turns the drain gate transistor GD off and turns the readout gate transistor G3 on when a time equal to "2 x the storage time To" has elapsed from the irradiation timing. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed.

The fourth drive pattern shown in Fig. 4 is a drive pattern where the storage timing for each of the readout gate transistors G1 to G4 relative to the irradiation timing is the same as that in the first drive pattern while the readout gate transistors G1 to G3 are not turned on. That is, the fourth drive pattern is one that does not store charge in the charge storage elements CS1 to CS3 corresponding to the readout gate transistors G1 to G3, compared to the first drive pattern. In the fourth drive pattern, this drive, which stores charge only in the charge storage element CS4, is executed repeatedly for a predetermined accumulated number of times N.

Specifically, in the fourth drive pattern, the timing control unit 41 performs control via the control circuit 322 such that the timing control unit 41 turns the drain gate transistor GD off and turns the readout gate transistor G4 on when "the storage time To x 3" has elapsed since the irradiation timing. After the readout gate transistor G4 is turned on, the readout gate transistor G4 is turned off and the drain gate transistor GD is turned on, when the storage time To has elapsed.

The reading interval is the period during which the storage signal corresponding to the charge amounts stored in the respective charge storage elements CS in each of the drive patterns is read and outputted. For example, the timing control unit 41 performs control via the control circuit 322 such that the timing control unit 41 turns the select gate transistor SL on and outputs the voltage (in the format of analog value) corresponding to the charge amounts stored in the charge storage elements CS1 to CS4 from the output terminals O1 to O4 to the pixel signal processing circuit 325. The pixel signal processing circuit 325 outputs the values obtained by converting each analog value output from the output terminals O1 to O4 into digital values via A/D conversion, as storage signals Q1 to Q4.

The storage signal Q1 shows a signal value obtained by converting the analog value outputted from the output terminal O1 into a digital value via the A/D conversion processing. The storage signal Q2 shows a signal value obtained by converting the analog value outputted from the output terminal O2 into a digital value via the A/D conversion processing.

The storage signal Q3 shows a signal value obtained by converting the analog value outputted from the output terminal O3 into a digital value via the A/D conversion processing. The storage signal Q4 shows a signal value obtained by converting the analog value outputted from the output terminal O4 into a digital value via the A/D conversion processing.

The range calculating unit 42 calculates a distance to the subject OB using the storage signal outputted during the reading interval. The range calculating unit 42 also calculates corrected storage signals Q# corresponding to the charge amounts stored per the same accumulated number of times, based on the respective storage signals Q1 to Q4 and the number of accumulation times N. For example, the distance D to the subject OB can be calculated using the following Equation (1).

$$Q1\# = Q1$$

$$Q2\# = Q2/2$$

$$Q3\# = Q3/3$$

$$Q4\# = Q4/4 \dots(1),$$

where

Q1# indicates the corrected storage signal corresponding to the storage signal Q1.
Q2# indicates the corrected storage signal corresponding to the storage signal Q2.
Q3# indicates the corrected storage signal corresponding to the storage signal Q3.
Q4# indicates the corrected storage signal corresponding to the storage signal Q4.

The range calculating unit 42 calculates a distance to the subject OB using the corrected storage signals Q#. For example, the distance to the subject OB can be calculated using the following Equation (2). Equation (2) shows an example where charge corresponding to the external light is stored in charge storage element CS1, and charge corresponding to both the external light and reflected light RL is stored in both the charge storage elements CS2 and CS3.

$$D = (Q3\# - Q1\#)/(Q2\# + Q3\# - 2Q1\#) \times c/2 \times Ta + c/2 \times Tc \dots(2),$$

where

D indicates a distance to a subject OB.
Q1# indicates the corrected storage signal corresponding to the storage signal Q1.
Q2# indicates the corrected storage signal corresponding to the storage signal Q2.
Q3# indicates the corrected storage signal corresponding to the storage signal Q3.
"c" indicates the speed of light.
Ta indicates a time width during which the optical pulse PO is irradiated.
Tc indicates a time difference between the irradiation of the optical pulse PO and the time when the readout gate transistor G2 is set to the ON state.

Thus, in the drive using the frame period shown in Fig. 4, during the first drive pattern performed within the frame period, charge is stored in each of the four charge storage elements CS1 to CS4. In the second drive pattern performed within the frame period, charge is stored in each of the three charge storage elements CS2 to CS4. In the third drive pattern, charge is stored in each of the two charge storage elements CS3 and CS4. In the fourth drive pattern, charge is stored in the one charge storage element CS4. Then, in the first drive pattern, the charge storage element CS with the smallest storage delay time is the charge storage element CS1, where the irradiation timing and storage timing are simultaneous. The charge storage element CS1 (representing the first charge storage element) does not store charge during the second drive pattern to the fourth drive pattern.

By this way of control, the time interval (i.e., an exposure time A described later), during which the pixel 321 receiving the reflected light RL arriving from closer-range objects stores charge, becomes shorter, as shown in the example of Fig. 4.

In other words, in the example shown in Fig. 4, the time interval (corresponding to an exposure time A) during which the charge storage element CS1 stores charge by receiving the reflected light RL which arrives from closer-range objects is a time obtained by multiplying the storage time To by the number of accumulation times N of the first drive pattern.

That is, the exposure time A = To × N. On the other hand, the time interval (corresponding to an exposure time B) during which the charge storage element CS4, which receives reflected light RL arriving from farther-range objects, stores charge is an interval obtained by multiplying the storage time To by the sum (4N) of the numbers of accumulation times for each of the first drive pattern to the fourth drive pattern. That is, the exposure time B = To × (4N). That is, the exposure time A is controlled to be less than the exposure time B.

In this manner, the time interval (i.e., the exposure time A) during which the pixel 321 receives the reflected light RL arriving from closer-range objects is controlled to be shorter than the exposure time B. This reduces the number of times the pixel 321, which receives the reflected light RL from farther-range objects, result in receiving the reflected light RL from closer-range objects. This reduces the number of times the pixel 321, which receives the reflected light RL from farther-range objects, result in receiving the reflected light RL from closer-range objects. Consequently, it becomes possible to more accurately measure distances to farther-range objects.

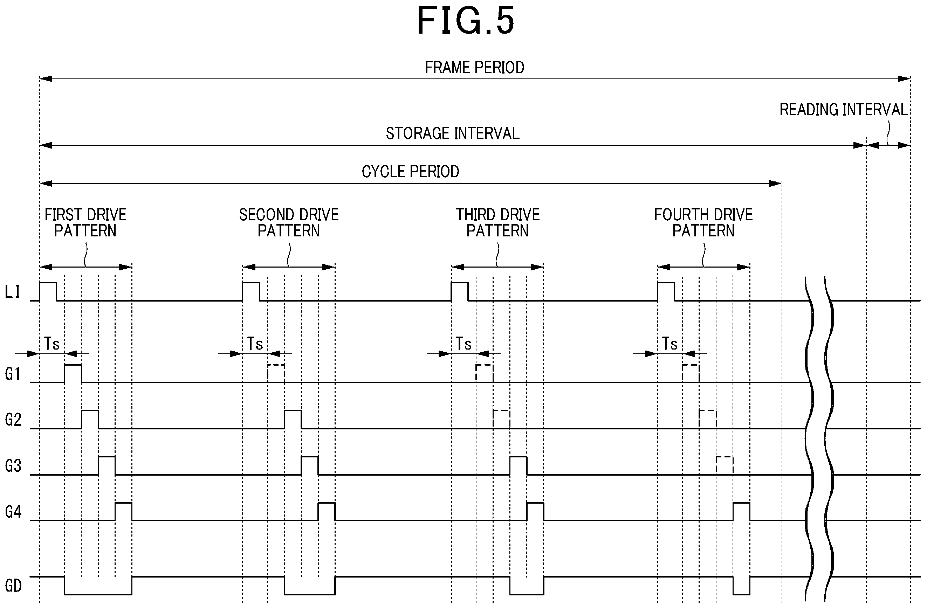

Fig. 5 is used to describe another example of the frame period which can be adopted in the present embodiment. Fig. 5 is a diagram illustrating the frame period according to another example. Fig. 5 shows a timing chart for elements assigned to the items "LI", "G1" to "G4", and "GD". The items "LI", "G1" to "G4", and "GD" are the same as those explained for Fig. 4, thus redundant descriptions thereof will be omitted. Meanwhile, the frame period shown in Fig. 5, like that shown in Fig. 4, includes a storage interval and a reading interval. In the storage interval, the cycle period is repeated a predetermined number of accumulation times N. During the cycle period, the operations for the light irradiation, charge storage, and signal readout are performed with the drive patterns corresponding to the first to fourth drive patterns.

In the frame period shown in Fig. 5, a specific non-storage time Ts is set. The non-storage time Ts is a time interval during which the charge is not stored in the charge storage element CS. In the frame period shown in Fig. 5, control is performed such that the charge is not stored in each of the charge storage elements CS until the non-storage time Ts has elapsed from the irradiation timing.

During the frame period shown in Fig. 5, for each of the drive patterns, the reflected light RL arriving at the range imaging device 1 is received after the non-storage time Ts has elapsed from the irradiation timing. In other words, the range imaging device 1 does not receive the reflected light RL that arrives before the non-storage time Ts has elapsed from the irradiation timing, that is, the reflected light RL arriving from closer-range objects will not be received. This configuration prevents the device from receiving the reflected light RL arriving from closer-range objects. Consequently, the pixel 321 that receives the reflected light RL arriving from farther-range objects can reduce the number of times the pixel 321 receives the reflected light RL which arrives from the closer-range objects. Consequently, it becomes possible to more accurately measure distances to farther-range objects.

The first drive pattern shown in Fig. 5 is different from that of Fig. 4 in that the charge storage timing set for the charge storage element CS1 is determined based on the point where non-storage time Ts has elapsed from the irradiation timing. In contrast, the first drive pattern shown in Fig. 5 is the same as the first drive pattern shown in Fig. 4 in that charge is stored sequentially in all of the four charge storage elements CS.

Specifically, in the first drive pattern, the timing control unit 41 performs control via the control circuit 322 such that the timing control unit 41 turns the drain gate transistor GD off and turns the readout gate transistor G1 on when the non-storage time Ts has elapsed from the irradiation timing. When the specific storage time To has elapsed since turning the readout gate transistor G1 on, the readout gate transistor G1 is turned off. At the timing when the readout gate transistor G1 is turned off, the readout gate transistor G2 is turned on. After the readout gate transistor G2 has been turned on, the readout gate transistor G2 is turned off when the storage time To has elapsed. At the timing when the readout gate transistor G2 is turned off, the readout gate transistor G3 is turned on. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed.

Thus, in the first drive pattern shown in Fig. 5, charge is sequentially stored in the respective charge storage elements CS1 to CS4 when the non-storage time Ts elapses from the irradiation timing. This drive is repeated a predetermined number of accumulation times N.

In the second drive pattern shown in Fig. 5 differs from that shown in Fig. 4 in that a reference is set at a time where the non-storage time Ts has elapsed since the irradiation timing. However, excluding the charge storage element CS1 which has the smallest storage delay time, storing charge sequentially into the three remaining charge storage elements CS2 to CS4 is equivalent to the second drive pattern shown in Fig 4. In the second drive pattern, after the non-storage time Ts has elapsed from the irradiation timing, the first frame follows. During this first frame, charge is stored sequentially in the charge storage elements CS2 to CS4, after the storage time To during which the charge was stored in the charge storage element CS1 has elapsed. This drive is repeated a predetermined number of accumulation times N.

Specifically, in the second drive pattern, the timing control unit 41 performs control via the control circuit 322 such that the timing control unit 41 turns the drain gate transistor GD off and turns the readout gate transistor G2 on when the non-storage time Ts has elapsed from the irradiation timing and, in addition to this elapse, the storage time To has elapsed thereafter. After the readout gate transistor G2 has been turned on, the readout gate transistor G2 is turned off when the storage time To has elapsed. At the timing when the readout gate transistor G2 is turned off, the readout gate transistor G3 is turned on. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed.

In the third drive pattern shown in Fig. 5, the time reference differs from that in Fig. 4 in that the time reference is set to a time when the non-storage time Ts has elapsed from the irradiation timing. On the other hand, charge is stored sequentially in the two charge storage elements CS3 and CS4, excluding the two charge storage elements CS1 and CS2 which have smaller storage delay times. This storage operation is equivalent to that of the third drive pattern shown in Fig. 4. In the third drive pattern, the foregoing drive operation, which sequentially stores charge in the charge storage elements CS3 to CS4, is repeated a predetermined number of accumulation times N.

Specifically, in the third drive pattern, when the non-storage time Ts has elapsed from the irradiation timing, and furthermore the "storage time To $\times$ 2" has elapsed, the timing control unit 41 turns off the drain gate transistor GD and turns on the readout gate transistor G3 via the control circuit 322. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed.

In the fourth drive pattern shown in Fig. 5, the time reference differs from that shown in Fig. 4 in that the time reference is set to a time when the non-storage time Ts has elapsed from the irradiation timing. On the other hand, charge is stored in only the one charge storage element CS4 whose storage delay time is the largest. This storage operation is equivalent to that for the fourth drive pattern shown in Fig. 4. In the fourth drive pattern, the foregoing drive operation for the fourth storage interval, which stores charge in only the charge storage element CS4, is repeated a predetermined number of accumulation times N.

Specifically, in the fourth drive pattern, via control circuit 322, the timing control unit 41 turns the drain gate transistor GD off and turns the readout gate transistor G4 on, when "storage time To $\times$ 3" has elapsed after the non-storage time Ts elapsed since irradiation timing. After the readout gate transistor G4 is turned on, the readout gate transistor G4 is turned off and the drain gate transistor GD is turned on, when the storage time To has elapsed.

The reading interval in Figure 5 is equivalent to the readout interval in Fig. 4, thus omitting description thereof. The range calculating unit 42 can calculate a distance to the subject OB using the storage signal outputted during the reading interval, in the same manner as that described with Fig. 4.

Thus, in the drive using the frame period shown in Fig. 5, the storage timing for the charge storage element CS1 (i.e., the first charge storage element), which has the smallest storage delay time, is set to a timing after a predetermined non-storage time Ts has elapsed from the irradiation timing. This configuration prevents the device from receiving the reflected light RL arriving from closer-range objects. Consequently, the pixel 321 that receives the reflected light RL arriving from farther-range objects can reduce the number of times the pixel 321 receives the reflected light RL which arrives from the closer-range objects. Consequently, it becomes possible to more accurately measure distances to farther-range objects.

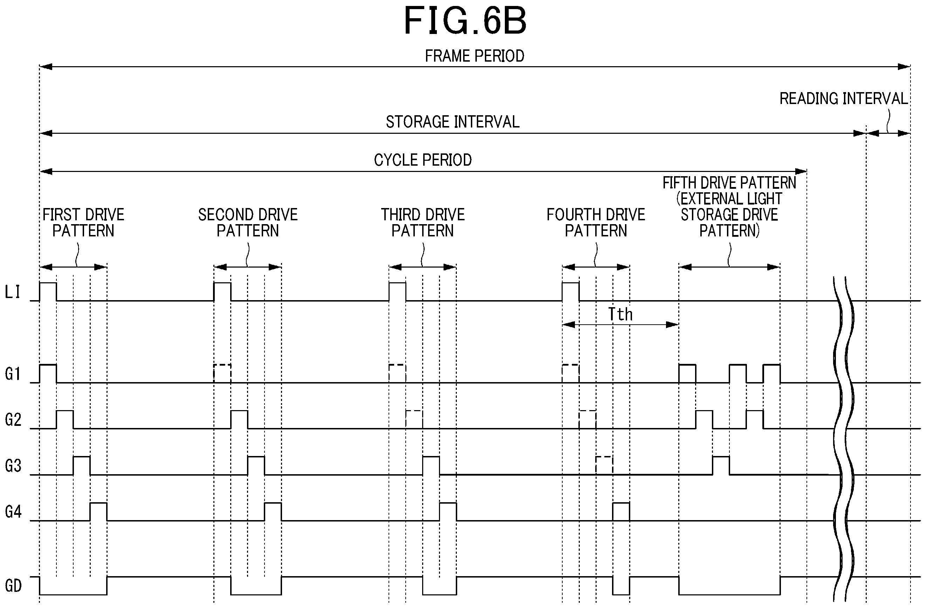

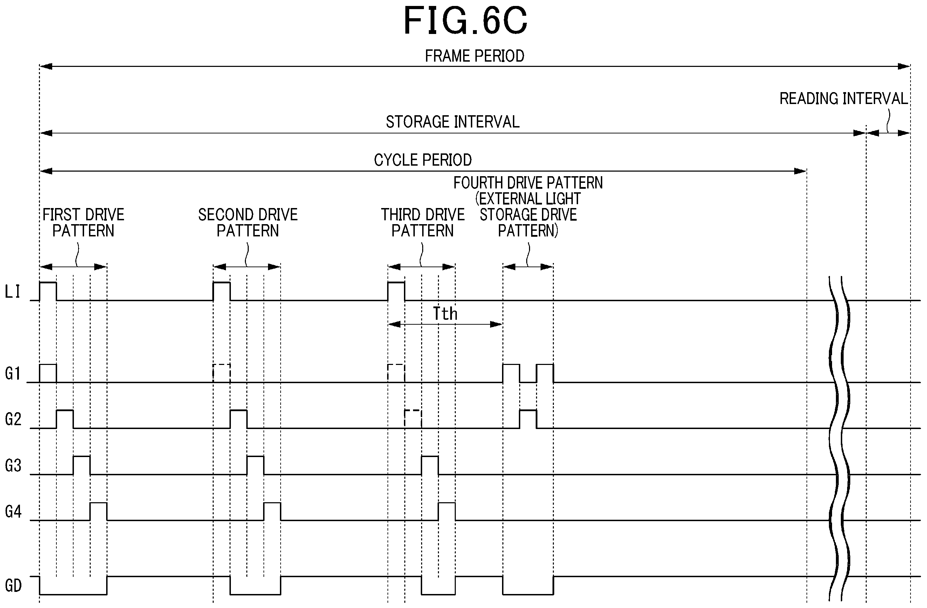

Using Figs. 6 (Figs. 6A to 6C), another example of the frame period according to the present embodiment will now be described. Fig. 6 is a diagram illustrating the frame period of the present embodiment. Fig. 6 shows timing charts for elements corresponding to the items "LI", "G1" to "G4", and "GD". The items "LI", "G1" to "G4", and "GD" are the same as those explained for Fig. 4, thus redundant descriptions thereof will be omitted. Furthermore, the frame period shown in Fig. 6 includes a storage interval and a reading interval, similarly to those explained with Fig, 4. During the storage interval, the cycle period is repeated a predetermined number of accumulation times N. During the cycle period, the operations for the light irradiation, charge storage, and signal readout are performed with the drive patterns corresponding to the first to fourth drive patterns.

In the frame period shown in Fig. 6A, a specific reflected light reception time Tth is set. The reflected light reception time Tth is a time at which the reflected light RL is expected to be received by the range imaging device 1 after the light pulse PO is irradiated, in which the time corresponds to a measurable distance. That is, the reflected light RL arrives during the interval from the irradiation timing until the reflected light reception time Tth elapses (the reflected light reception interval). In other words, the reflected light RL does not come during any time interval other than the reflected light reception interval. During this time interval when no reflected light RL arrives, charge is stored in the charge storage element CS, into which the charge has not been stored in the reflected light reception interval. By driving in this manner, the number of accumulation times for each of the charge storage elements CS is made within the frame period.

During the frame period shown in Fig. 6A, the same drive as those shown in Fig. 4 is performed during the reflected light reception interval, which is a time interval from the irradiation timing to a time at which the reflected light reception time Tth lapses. Then, of the respective drive patterns, in the drive pattern where the charge storage element CS did not store charge, charge is accumulated in the charge storage element CS that did not store charge during the reflected light reception interval, when the time interval from the irradiation timing to the reflected light reception time Tth (a time interval different from the reflected light reception interval), i.e., during the time interval in which no reflected light RL arrives.

Thus, during the frame period shown in Fig. 6A, charge can be stored in all of the charge storage elements CS for each drive pattern, enabling the respective charge storage elements CS to undergo the same number of accumulation times within a single frame. That is, the external light signal Qb (i.e., the signal value corresponding to the amount of charge stored in the charge storage element CS in response to the external light intensity) contained in any storage signal Q becomes the same amount. Therefore, for any storage signal Q, a storage signal free of external light components (i.e., external light-subtracted storage signals Qa) can be calculated using a uniform external light signal Qb derived from the storage signal Q. Furthermore, since the number of times the external light component is stored increases in comparison with the drive method shown with Figs. 4 and 5, it becomes possible to calculate an external light signal Qb with suppressed variation in external light. Consequently, the external light signal Qb can be calculated with higher precision, thereby enabling the accurate calculation of the value of the external light signal Qb which is to be subtracted from the storage signal Q. The distance to subjects OB can therefore be calculated with higher precision.

The first drive pattern shown in Fig. 6A is equivalent to the first drive pattern shown in Fig. 4, thus omitting a description therefor.

According to the second drive pattern shown in Fig. 6A, charge is stored in each of the charge storage elements CS2 to CS4 during the reflected light reception interval, at the same storage timing as that shown in the second drive pattern in Fig. 4. In addition, charge is stored in the charge storage element CS1 during a time interval different from the reflected light reception interval, namely, a time interval during which no reflected light RL arrives.

Specifically, in the second drive pattern, the timing control unit 41 performs control via the control circuit 322 such that the timing control unit 41 turns the drain gate transistor GD off and turns the readout gate transistor G2 on after the storage time To has elapsed from the irradiation timing. After the readout gate transistor G2 has been turned on, the readout gate transistor G2 is turned off when the storage time To has elapsed. At the timing when the readout gate transistor G2 is turned off, the readout gate transistor G3 is turned on. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed. Then, when the reflected light reception time Tth has elapsed since the irradiation timing, the timing control unit 41 turns off the drain gate transistor GD and turns on the readout gate transistor G1. When the readout gate transistor G1 has been turned on for the storage time To, the timing control unit 41 turns off the readout gate transistor G1 and turns on the drain gate transistor GD.

Thus, in the second drive pattern, charge is stored in the charge storage element CS1 during a time interval which is different from the reflected light reception interval. The reflected light RL does not enter this element CS1 during this time interval which is different from the reflected light reception interval. Therefore, in the second drive pattern, only charges corresponding to external light are stored in the charge storage element CS1. In the second drive pattern, the drive operation is repeated the predetermined number of accumulation times N, where, during each repeated drive, charge is sequentially stored in the charge storage elements CS2 to CS4 during the reflected light reception interval, and charge is stored in the charge storage element CS1 during a time interval which is different from the reflected light reception interval.

According to the third drive pattern shown in Fig. 6A, charge is stored in each of the charge storage elements CS3 and CS4 during the reflected light reception interval, at the same storage timing as that shown in the third drive pattern in Fig. 4. After this charge storage, charge is stored in the charge storage elements CS1 and CS2 during a time interval different from the reflected light reception interval, namely, a time interval during which no reflected light RL arrives.

Specifically, in the third drive pattern, the timing control unit 41 performs control, via the control circuit 322 to turn the drain gate transistor GD off and turn the readout gate transistor G3 on, when the "storage time To × 2" has elapsed from the irradiation timing. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed. Then, when the reflected light reception time Tth has elapsed since the irradiation timing, the timing control unit 41 turns off the drain gate transistor GD and turns on the readout gate transistor G1. When the storage time To has elapsed since the readout gate transistor G1 was turned on, the readout gate transistor G1 is turned off. At the timing when the readout gate transistor G1 is turned off, the readout gate transistor G2 is turned on. When the storage time To has elapsed since the readout gate transistor G2 was turned on, the readout gate transistor G2 is turned off and the drain-gate transistor GD is turned on.

In this way, in the third drive pattern, charges are stored in the charge storage elements CS1 to CS2 during the time interval which is different from the reflected light reception interval. The reflected light RL does not enter this element CS1 during this time interval which is different from the reflected light reception interval. Therefore, in the third drive pattern, only charge corresponding to the external light is stored in the charge storage elements CS1 to CS2. Meanwhile, in the third drive pattern, the drive operation is executed repeatedly for the predetermined number of accumulation times N, where charge is sequentially stored in the charge storage elements CS3 to CS4 during the reflected light reception interval and charge is stored in the charge storage elements CS1 to CS2 during a time interval which is different from the reflected light reception interval.

The fourth drive pattern shown in Fig. 6A is provided with the same storage timing as that provided in the fourth drive pattern in Fig. 4. Thus, this fourth drive pattern, charge is stored in the charge storage element CS4 during the reflected light reception interval, then charge is stored in the charge storage elements CS1 to CS3 during the time interval which is different from the reflected light reception interval.

Specifically, in the fourth drive pattern, the timing control unit 41 performs control via the control circuit 322 to turn the drain gate transistor GD off and turn the readout gate transistor G4 on, when the "storage time To × 3" has elapsed from the irradiation timing. After the readout gate transistor G4 is turned on, the readout gate transistor G4 is turned off and the drain gate transistor GD is turned on, when the storage time To has elapsed. Then, when the reflected light reception time Tth has elapsed since the irradiation timing, the timing control unit 41 turns off the drain gate transistor GD and turns on the readout gate transistor G1. When the storage time To has elapsed since the readout gate transistor G1 was turned on, the readout gate transistor G1 is turned off. At the timing when the readout gate transistor G1 is turned off, the readout gate transistor G2 is turned on. After the readout gate transistor G2 has been turned on, the readout gate transistor G2 is turned off when the storage time To has elapsed. At the timing when the readout gate transistor G2 is turned off, the readout gate transistor G3 is turned on. When the storage time To has elapsed since turning on readout gate transistor G3, the readout gate transistor G3 is turned off and simultaneously the drain gate transistor GD is turned on.

Thus, in the fourth drive pattern, charge is stored in the charge storage elements CS1 to CS3 during the time interval which is different from the reflected light reception interval. The reflected light RL does not enter this element CS1 during this time interval which is different from the reflected light reception interval. Therefore, in the fourth drive pattern, only charge corresponding to the external light is stored in the charge storage elements CS1 to CS3. In the fourth drive pattern, this drive operation, which is to store charge only in the charge storage element CS4 during the reflected light reception interval and to store charge in the charge storage elements CS1 to CS3 during the time interval different from the reflected light reception interval, is repeated the predetermined number of accumulation times N.

The reading interval shown in Fig. 6A is equivalent to the readout period shown in Fig. 4, thus omitting its description. The range calculating unit 42 calculates a distance to the subject OB using the storage signal outputted during the reading interval.

First, the range calculating unit 42 calculates an external light signal Qb. For example, as the value of the external light signal Qb, the range calculating unit 42 sets the smallest signal value among the values of the storage signals Q1 to Q4. That is, the external light signal Qb = min(Q1, Q2, Q3, Q4).

The range calculating unit 42 calculates an external light-subtracted storage signals Qa by subtracting the external light signal Qb from each of the storage signals Q1 to Q4. Specifically, the external light-subtracted storage signals Qa can be calculated using the following equation (3).

$$Qa1 = Q1 - Qb$$

$$Qa2 = Q2 - Qb$$

$$Qa3 = Q3 - Qb$$

$$Qa4 = Q4 - Qb \ldots (3),$$

where

Qa1 represents an external light-subtracted storage signal corresponding to the storage signal Q1.
Qa2 represents an external light-subtracted storage signal corresponding to the storage signal Q2.
Qa3 represents an external light-subtracted storage signal corresponding to the storage signal Q3.
Qa4 represents an external light-subtracted storage signal corresponding to the storage signal Q4.
Qb represents an external light signal.

The range calculating unit 42 calculates distances D to subjects OB using the external light-subtracted storage signals Qa (i.e., the external light-subtracted storage signals Qa1 to Qa4). The range calculating unit 42 calculates correction signals Qa# for the light intensity of reflected light stored per equal number of accumulation times, based on each of the external light-subtracted storage signals Qa1 to Qa4 and the number of accumulation times N.

$$Qa1\# = Q1a$$

$$Qa2\# = Q2a/2$$

$$Qa3\# = Q3a/3$$

$$Qa4\# = Q4a/4 \ldots(4),$$

where

Qa1# represents a correction signal for the external light-subtracted storage signals Qa1.
Qa2# represents a correction signal for the external light-subtracted storage signals Qa2.
Qa3# represents a correction signal for the external light-subtracted storage signals Qa3.
Qa4# represents a correction signal for the external light-subtracted storage signals Qa4.

The range calculating unit 42 calculates a distance to a subject OB using the correction signals Qa# (i.e., the correction signals Qa1# to Qa4#). For example, the distance D to the subject OB can be calculated using the following Equation (5). Equation (5) shows an example where the charge corresponding to the reflected light RL is stored in the charge storage elements CS2 and CS3.

$$D = (Qa3\#) / (Qa2\# + Qa3\#) \times c/2 \times Ta + c/2 \times Tc \ldots(5),$$

where

D indicates a distance to a subject OB.
Qa2# represents a correction signal for the external light-subtracted storage signals Qa2.
Qa3# represents a correction signal for the external light-subtracted storage signals Qa3.
"c" indicates the speed of light.
Ta indicates a time width during which the optical pulse PO is irradiated.
Tc indicates a time difference between the irradiation of the optical pulse PO and the time when the readout gate transistor G2 is set to the ON state.

Thus, in the drive using the frame period described with Fig. 6A, by the first drive pattern within the frame period, charge is stored in each of the four charge storage elements CS1 to CS4 during the reflected light reception interval. By the second drive pattern within the frame period, charge is stored in each of the three charge storage elements CS2 to CS4 during the reflected light reception interval. By the third drive pattern, charge is stored in each of the two charge storage elements CS3 and CS4 during the reflected light reception interval. By the fourth drive pattern, charge is stored in the one charge storage element CS4 during the reflected light reception interval. In the first drive pattern, the charge storage element CS with the smallest storage delay time is the charge storage element CS1 where the irradiation timing and storage timing are simultaneous. The charge storage element CS1 (i.e., the first charge storage element) does not store charge during the reflected light reception interval in the second drive pattern through the fourth drive pattern. Then, in the second drive pattern to the fourth drive pattern, charge is stored in the charge storage element CS1 (first charge storage element), which did not store charge during the reflected light reception interval, at a time interval which is different from the reflected light reception interval. In addition, in the frame period, the sum of the first number of times and the second number of times is made to be equal to the third number of times as a result of storing charge in the charge storage element CS. The first number of times is the number of times charge is stored in the charge storage element CS1 (i.e., the first charge storage element) during the reflected light reception interval in the first to fourth drive patterns. The second number of times is the number of times charge is stored in the charge storage element CS1 (i.e., the first charge storage element) during the time interval which is different from the reflected light reception interval in the first to fourth drive patterns. The third number of times is the number of times charge is stored in the charge storage element CS4 (i.e., the second charge storage element) during the reflected light reception interval in the first to fourth drive patterns.

In other words, in the example shown in Fig. 6A, it is possible to control the system so that the number of accumulation times for the respective charge storage elements CS become equal to each other in one frame period. The time (i.e., an exposure time X) during which the charge storage element CS1 stores charge is a time interval provided by multiplying the storage time To by the sum (4N) of the numbers of accumulation times N for each of the first to fourth drive patterns. That is, the exposure time X = To × (4N). On the other hand, the time (i.e, an exposure time Y) during which the charge storage element CS4 stores charge is a time interval provided by multiplying the storage time To by the sum (4N) of the numbers of accumulation times N for each of the first to fourth drive patterns (4N). That is, the exposure time Y = To × (4N). Therefore, a relationship of the exposure time X = the exposure time Y is realized. In addition, in the reflected light reception interval, the pixel 321 is driven in the same way as that shown in Fig. 4. Consequently, the time interval (an exposure time A) provided to receive the reflected light RL arriving from closer-range objects is shorter than an exposure time B, which is provided to receive the reflected light RL arriving from farther-range objects.

In this manner, by controlling the time for receiving the reflected light RL arriving from closer-range objects to be shortened, while ensuring each of the charge storage elements CS stores charge the same number of times during the frame period, the amount of the external light signal Qb contained within any storage signal Q can be made a uniform value. Furthermore, by increasing the number of times the external light components are stored, it becomes possible to calculate the external light signal Qb that suppresses variations in the external light. The distance to subjects OB can therefore be calculated with higher precision.

Fig. 6B shows a modified example 1 of Fig. 6A. In this modified example, after performing the first drive pattern to the fourth drive pattern, the fifth drive pattern (provided as an external light storage drive pattern) is implemented. In the fifth drive pattern, the drive operations, which are related to storing charge from only the external light during the time interval different from the reflected light reception interval in each of the drive patterns shown in Fig. 6A (i.e., the time interval with no reflected light RL entered), are performed collectively.

In Fig. 6B, the first to fourth drive patterns are the same as the first to fourth drive patterns shown in the frame period of Fig. 4.

In addition, in the frame period of Fig. 6B, the fifth drive pattern is executed after the reflected light reception time Tth has elapsed from the start of the fourth drive pattern. In the fifth drive pattern, charge is stored three times into the charge storage element CS1, twice into the charge storage element CS2, and once into the charge storage element CS3.

This figure shows an example where charge is stored in the order starting from the charge storage element CS1, to the charge storage element CS2, to the charge storage element CS3, to the charge storage element CS1, to the charge storage element CS2, and to the charge storage element CS1.

Specifically, in the fifth drive pattern, the timing control unit 41 performs control via the control circuit 322 to turn the drain gate transistor GD off and turn the readout gate transistor G1 on, when the reflected light reception time Tth has elapsed since the start of the fourth drive pattern. When the storage time To has elapsed since the readout gate transistor G1 was turned on, the readout gate transistor G1 is turned off. At the timing when the readout gate transistor G1 is turned off, the readout gate transistor G2 is turned on. After the readout gate transistor G2 has been turned on, the readout gate transistor G2 is turned off when the storage time To has elapsed. At the timing when the readout gate transistor G2 is turned off, the readout gate transistor G3 is turned on. After the readout gate transistor G3 has been turned on, the readout gate transistor G3 is turned off when the storage time To has elapsed. At the timing when the readout gate transistor G3 is turned off, the readout gate transistor G1 is turned on. When the storage time To has elapsed since the readout gate transistor G1 was turned on, the readout gate transistor G1 is turned off. At the timing when the readout gate transistor G1 is turned off, the readout gate transistor G2 is turned on. After the readout gate transistor G2 has been turned on, the readout gate transistor G2 is turned off when the storage time To has elapsed. At the timing when the readout gate transistor G2 is turned off, the readout gate transistor G1 is turned on. When the readout gate transistor G1 has been turned on for the storage time To, the timing control unit 41 turns off the readout gate transistor G1 and turns on the drain gate transistor GD.

Thus, in the fifth drive pattern shown in Fig. 6B, by storing charge corresponding only to the external light without irradiating the optical pulse PO, the number of accumulation times for each of the charge storage elements CS is made equal in the frame period. By providing the fifth drive pattern, the time required to execute each drive pattern (i.e., the first drive pattern to fourth drive pattern) can be shortened compared to that explained with Fig. 6A. This allows the cycle period shown in Fig. 6B to be shorter than that shown in Fig. 6A. Consequently, when setting the time required for driving one frame to be the same in both Fig. 6A and Fig. 6B, Fig. 6B is able to have a shorter cycle period. This enables either a longer storage time or an increased number of accumulation times. In other words, the time interval (corresponding to the exposure time) for storing charge into each of the charge storage elements CS within one frame can be lengthened. Extending the exposure time improves the S/N ratio of the storage signal, thereby enhancing the measurement accuracy of the distance D to the subject OB. Furthermore, when the storage time and number of accumulation times are unchanged between Fig. 6A and Fig. 6B, Fig. 6B has a shorter cycle period compared to that shown in Fig. 6A. This allows the time required to drive one frame to be shortened. In other words, since the measurement time can be shortened in the configuration of Fig. 6B, it becomes possible to accurately measure subjects with fast motion.

Fig. 6C shows a modified example 2 of the configuration shown in Fig. 6A. In this modified example, first, the first drive pattern to the third drive pattern, which are among the respective drive patterns shown in Fig. 6A, are performed. Next, in the reflected light reception interval, the drive for the storage of charge associated with only the external light in the different time intervals (i.e., the time intervals with no reflected light RL) is performed with the first drive pattern to the third drive pattern. After this performance, the fourth drive pattern (i.e., the external light storage drive pattern) is performed collectively.

In this modified example 2, in the drive that stores charge in the reflected light reception interval within one frame period, multiple drives with different drive patterns may be executed. As shown in Fig. 6C, the three drive patterns composed of the first to third drive patterns can be executed.

Furthermore, the configuration may also be such that at least two or more of the drive patterns shown in Fig. 4, which are designed among the first to fourth drive patterns, are executed. At least two of the drive patterns selected from the first drive pattern to the fourth drive pattern shown in Figure 4 include, for example, any combination such as the first drive pattern and the second drive pattern, the first drive pattern and the third drive pattern, the first drive pattern and the fourth drive pattern, the second drive pattern and the third drive pattern, the second drive pattern and the fourth drive pattern, and the third drive pattern and the fourth drive pattern.

In Fig. 6C, the first drive pattern to the third drive pattern are the same as the first drive pattern to the third drive pattern in the frame period shown in Fig. 4.

In addition, in the frame period shown in Fig. 6C, the fourth drive pattern is executed at a time when the reflected light reception time Tth has elapsed from the start of the third drive pattern. In the fourth drive pattern, charge is stored twice in the charge storage element CS1 and once in the charge storage element CS2.

This figure shows an example where charge is stored in the order starting from the charge storage element CS1, to the charge storage element CS2, and, to the charge storage element CS1.

Specifically, in the fourth drive pattern shown in Fig. 6C, the timing control unit 41 performs control, via the control circuit 322, to turn the drain gate transistor GD off and turn the readout gate transistor G1 on, when the reflected light reception time Tth has elapsed since the start of the third drive pattern. When the storage time To has elapsed since the readout gate transistor G1 was turned on, the readout gate transistor G1 is turned off. At the timing when the readout gate transistor G1 is turned off, the readout gate transistor G2 is turned on. After the readout gate transistor G2 has been turned on, the readout gate transistor G2 is turned off when the storage time To has elapsed. At the timing when the readout gate transistor G2 is turned off, the readout gate transistor G1 is turned on. When the readout gate transistor G1 has been turned on for the storage time To, the timing control unit 41 turns off the readout gate transistor G1 and turns on the drain gate transistor GD.

Thus, in the fourth drive pattern shown in Fig. 6C, the charge corresponding only to the external light are stored without irradiating the optical pulse PO. As a result, the cycle period shown in Fig. 6C becomes shorter than that provided in the comparative example which omits the fourth drive pattern from the configuration shown in Fig. 6A. As a result, when setting the time required for one frame drive to be identical between the comparative example and the example shown in Fig. 6C, the example of Fig. 6C allows for a longer storage time or an increased number of accumulation times, due to its shorter cycle period. That is, the exposure time for each of the charge storage elements CS can be lengthened in the frame period. Extending the exposure time improves the S/N ratio of the storage signal, thereby enhancing the measurement accuracy of the distance D to the subject OB. Furthermore, when the storage time and the number of accumulation times are unchanged between the comparative example and the example shown in Fig. 6C, the shorter cycle period in Fig. 6C compared to the comparative example allows the time required to drive one frame to be shortened. In other words, since the measurement time can be shortened in Fig. 6C, it becomes possible to accurately measure subjects with fast motion.

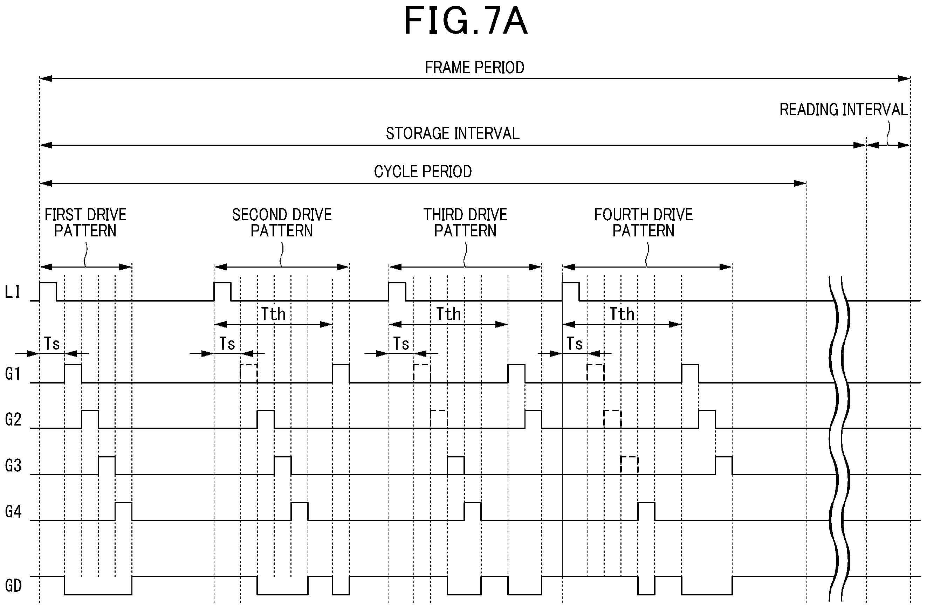

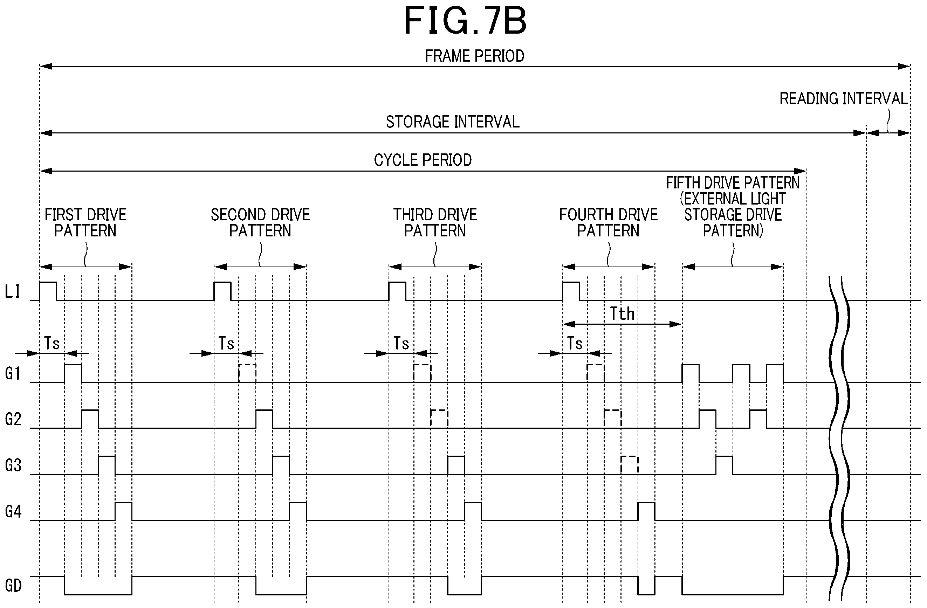

With reference to Fig. 7 (Figs. 7A to 7B), another example of the frame period according to the present embodiment will now be described. Fig. 7 is a diagram illustrating the frame period according to the present embodiment. Fig. 7 shows timing charts for elements corresponding to the items "LI", "G1" to "G4", and "GD". The items "LI", "G1" to "G4", and "GD" are the same as those explained for Fig. 4, thus redundant descriptions thereof will be omitted. Furthermore, the frame period shown in Fig. 7, like that shown in Fig. 4, includes the storage interval and the reading interval. During the storage interval, the cycle period is repeated a predetermined number of accumulation times N. During the cycle period, the operations for the light irradiation, charge storage, and signal readout are performed with the drive patterns corresponding to the first to fourth drive patterns.

In the frame period shown in Fig. 7A, both the non-storage time Ts shown in Fig. 5 and the reflected light reception time Tth shown in Fig. 6A are set.

In the frame period shown in Fig. 7A, charge is not stored in each of the charge storage elements CS until the non-storage time Ts has elapsed from the irradiation timing. In this state, the drive identical to that shown in Fig. 5 is performed during the reflected light reception interval. Therefore, similarly to that shown in Fig. 6A, the drive patterns include a drive pattern which does not allow charge to be stored into the charge storage elements CS. In this drive pattern, charge is stored in the charge storage elements CS, into which charge was not stored during the reflected light reception interval, during a time interval which is different from the reflected light reception interval.

Thus, during the frame period shown in Fig. 7A, for each of the drive patterns, the range imaging device 1 does not receive the reflected light RL (i.e., reflected light RL arriving from closer-range objects) that enters before a time when the non-storage time Ts has elapsed from the irradiation timing. In parallel with this, the number of accumulation times for each of the charge storage elements CS is made the same in the one frame. Consequently, this reduces the number of times the pixel 321, which is ready for receiving the reflected light RL from farther-range objects, undesirably receives the reflected light RL from closer-range objects. It also simplifies the process of calculating distance.

The first drive pattern shown in Fig. 7 is equivalent to the first drive pattern shown in Fig. 5, thereby omitting its description.

In the second drive pattern shown in Fig. 7A, a reference point is designated as a time when the non-storage time Ts has elapsed from the irradiation timing.

Using this reference point, charge is stored in each of the charge storage elements CS2 to CS4 during the reflected light reception interval. Meanwhile, charge is stored in the charge storage element CS1 during a time interval which is different from the reflected light reception interval.

Specifically, in the second drive pattern, the timing control unit 41 performs control via the control circuit 322 such that the timing control unit 41 turns the drain gate transistor GD off and turns the readout gate transistor G2 on when the non-storage time Ts has elapsed from the irradiation timing and, in addition to this elapse, the storage time To has elapsed thereafter. After the readout gate transistor G2 has been turned on, the readout gate transistor G2 is turned off when the storage time To has elapsed. At the timing when the readout gate transistor G2 is turned off, the readout gate transistor G3 is turned on. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed. Then, when the reflected light reception time Tth has elapsed since the irradiation timing, the timing control unit 41 turns off the drain gate transistor GD and turns on the readout gate transistor G1. When the readout gate transistor G1 has been turned on for the storage time To, the timing control unit 41 turns off the readout gate transistor G1 and turns on the drain gate transistor GD.

The second drive pattern uses, as a reference point, a time point at which the non-storage time Ts has elapsed from the irradiation timing. In the second drive pattern, based on this reference point, charge is stored sequentially in the charge storage elements CS2 to CS4 during each of their reflected light reception intervals, while charge is stored in the charge storage element CS1 during a time interval which is different from the reflected light reception interval. The drive assigned to the second storage interval is executed repeatedly for the predetermined number of accumulation times N.

In the third drive pattern shown in Fig. 7A, a time point at which the non-storage time Ts elapses from the irradiation timing is set as a reference point. According to this reference point, charge stores in each of the charge storage elements CS3 to CS4 during their reflected light reception intervals. Furthermore, the charge stores in the charge storage elements CS1 to CS2 during the time interval which is different from the reflected light reception interval in each of the drive patterns.

Specifically, in the third drive pattern, the timing control unit 41 performs control, via the control circuit 322, to turn the drain gate transistor GD off and turn the readout gate transistor G3 on, when the non-storage time Ts and the "storage time To × 2" has elapsed since the irradiation timing. After the readout gate transistor G3 has been turned on, the readout gate transistor G3 is turned off when the storage time To has elapsed. At the timing when the readout gate transistor G3 is turned off, the readout gate transistor G4 is turned on. After the readout gate transistor G4 is turned on, the readout gate transistor G4 is turned off and the drain gate transistor GD is turned on, when the storage time To has elapsed. Then, when the reflected light reception time Tth has elapsed since the irradiation timing, the timing control unit 41 turns off the drain gate transistor GD and turns on the readout gate transistor G1. When the storage time To has elapsed since the readout gate transistor G1 was turned on, the readout gate transistor G1 is turned off. At the timing when the readout gate transistor G1 is turned off, the readout gate transistor G2 is turned on. When the storage time To has elapsed since the readout gate transistor G2 was turned on, the readout gate transistor G2 is turned off and the drain-gate transistor GD is turned on.

Thus, in the third drive pattern, a time point when the non-storage time Ts elapsed from the irradiation timing is used as the reference point, and charge is sequentially stored in the charge storage elements CS3 to CS4, element by element, during the reflected light reception interval. Meanwhile, charge is stored in the charge storage elements CS1 to CS2, element by element, during a time interval which is different from the reflected light reception interval.

This charge storage drive is repeated the predetermined number of accumulation times N.

In the fourth drive pattern shown in Fig. 7A, a time point at which the non-storage time Ts elapses from the irradiation timing serves as a reference point. Based on this reference point, charge is stored in the charge storage element CS4 during the reflected light reception interval. Furthermore, charge is stored in the charge storage elements CS1 to CS3, element by element, during the time interval which is different from the reflected light reception interval.

Specifically, in the fourth drive pattern, the timing control unit 41 performs control via the control circuit 322 to turn the drain gate transistor GD off and turn the readout gate transistor G4 on, when the non-storage time Ts and the "storage time To × 3" has elapsed since the irradiation timing. After the readout gate transistor G4 is turned on, the readout gate transistor G4 is turned off and the drain gate transistor GD is turned on, when the storage time To has elapsed. Then, when the reflected light reception time Tth has elapsed since the irradiation timing, the timing control unit 41 turns off the drain gate transistor GD and turns on the readout gate transistor G1. When the storage time To has elapsed since the readout gate transistor G1 was turned on, the readout gate transistor G1 is turned off. At the timing when the readout gate transistor G1 is turned off, the readout gate transistor G2 is turned on. After the readout gate transistor G2 has been turned on, the readout gate transistor G2 is turned off when the storage time To has elapsed. At the timing when the readout gate transistor G2 is turned off, the readout gate transistor G3 is turned on. When the storage time To has elapsed since turning on readout gate transistor G3, the readout gate transistor G3 is turned off and simultaneously the drain gate transistor GD is turned on.

Thus, in the fourth drive pattern, charge is stored in the charge storage element CS4 during the reflected light reception interval, based on a reference point served by a time point when the non-storage time Ts has elapsed from the irradiation timing. Meanwhile, charge is stored in the charge storage elements CS1 to CS3, element by element, during the time interval which is distinct from the reflected light reception interval. This drive is repeated the predetermined number of accumulation times N.

The reading interval shown in Fig. 7A is equivalent to the readout interval shown in Fig. 4, so that its description is omitted. The range calculating unit 42 can calculate a distance to a subject OB using the storage signals outputted during the reading interval, in the same manner as that described with Fig. 6A.

Thus, the drive using the frame period shown in Fig. 7A adopts multiple drive patterns, in which the control is performed so that the range imaging device 1 does not receive the reflected light RL arriving before the non-storage time Ts has elapsed from the irradiation timing. In addition, the control is performed so that, in the reflected light reception interval, the relationship of "exposure time A < exposure time B", and in the frame period, the relationship of "exposure time X = exposure time Y" are realized.

As a result, the range imaging device 1 does not receive the reflected light RL that arrives before the non-storage time Ts has elapsed from the irradiation timing. In parallel, it is possible to set the exposure times as "exposure time A < exposure time B" in the reflected light reception interval. Consequently, the pixel 321 that receives the reflected light RL arriving from farther-range objects can reduce the number of times the pixel receives the reflected light RL arriving from closer-range objects.

Furthermore, by controlling the exposure times at "exposure time X = exposure time Y" in the frame period, the process of calculating distance can be simplified.

Fig. 7B shows a modified example 1 of Fig. 7A. In this modified example, after performing the first drive pattern to the fourth drive pattern, the fifth drive pattern (provided as an external light storage drive pattern) is implemented. In the fifth drive pattern, the drive operations related to storing charge corresponding (only) to the external light during a time interval different from the reflected light reception interval (a time interval where reflected light RL does not enter) are collectively performed for each drive pattern shown in Fig. 7A.

In Fig. 7B, the first drive pattern to the fourth drive pattern are the same as the first drive pattern to the fourth drive pattern described in the frame period of Fig. 5.

Furthermore, in the frame period shown in Fig. 7B, the fifth drive pattern is executed when the reflected light reception time Tth has elapsed from the start of the fourth drive pattern.

The fifth drive pattern shown in Fig. 7B is the same as the fifth drive pattern shown in Fig. 6B.

In this way, in the fifth drive pattern of Fig. 7B, by storing charge corresponding only to the external light without irradiating the optical pulse PO, the number of accumulation times for each of the charge storage elements CS is made equal to each other in the frame period. By providing the fifth drive pattern, the time required to implement each drive pattern (i.e., the first drive pattern to the fourth drive pattern) can be shortened, compared to that shown in Fig. 7A. This allows the cycle period explained with Fig. 7B to be shorter than that explained with Fig. 7A. Consequently, when setting the time required for driving one frame to be the same in both Fig. 7A and Fig. 7B, the configuration shown in Fig. 7B has a shorter cycle period. This enables either a longer storage time or an increased number of accumulation times. In other words, the time interval (corresponding to the exposure time) for storing charge into each of the charge storage elements CS within one frame can be lengthened. Extending the exposure time improves the S/N ratio of the storage signal, thereby enhancing the measurement accuracy of the distance D to the subject OB. Furthermore, when the storage time and the number of accumulation times are unchanged between the configurations shown Fig. 7A and Fig. 7B, the configuration of Fig. 7B is able to provide a shorter cycle period compared to that of Fig. 7A. This allows the time required for driving one frame to be shortened. In other words, since the measurement time can be shortened in Fig. 7B, it becomes possible to accurately measure distances to subjects with fast motion.

Furthermore, as explained in the example of Fig. 6C, the examples shown in Figs. 7A and 7B may also be configured such that at least two or more of the first drive pattern to the fourth drive pattern are executed. The combinations of at least two of the drive patterns from the first drive pattern to the fourth drive pattern include, for example, any combination such as the first drive pattern and the second drive pattern, the first drive pattern and the third drive pattern, the first drive pattern and the fourth drive pattern, the second drive pattern and the third drive pattern, the second drive pattern and the fourth drive pattern, and the third drive pattern and the fourth drive pattern.

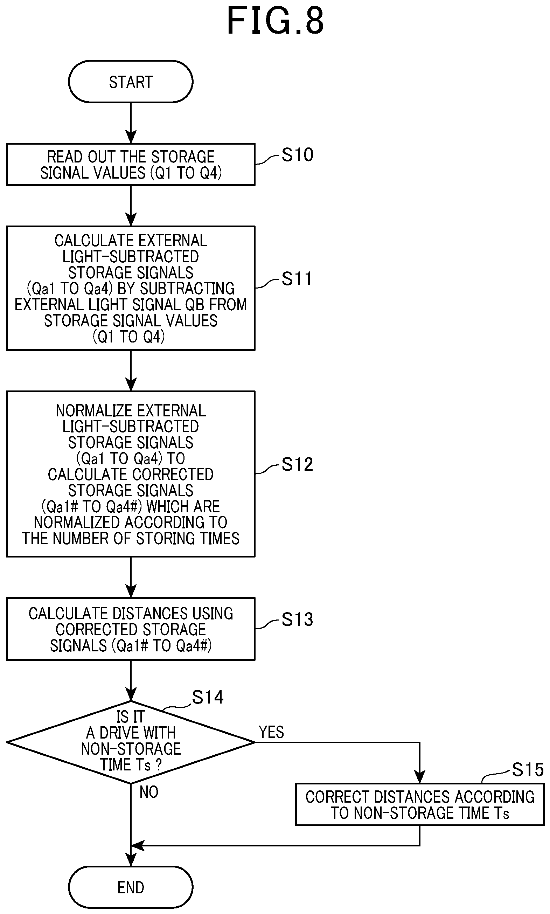

Using Fig. 8, the processing flow performed by the range imaging device 1 will now be described. Fig. 8 is a flowchart showing the processing flow performed by the range imaging device 1 according to the present embodiment. Fig. 8 shows the processing flow for calculating a distance to a subject OB after performing drive operations which are set to the frame period.

Step S10: The range imaging device 1 reads out the storage signals Q1 to Q4.

Step S11: The range imaging device 1 calculates the external light-subtracted storage signals Qa1 to Qa4. For example, the range imaging device 1 sets the smallest signal value among the storage signals Q1 to Q4 as the external light signal Qb, which corresponds to the light intensity of the external light alone. The range imaging device 1 calculates the external light-subtracted storage signals Qa1 to Qa4 by subtracting the external light signal Qb from each of the storage signals Q1 to Q4, as shown in Equation (3).

Step S12: The range imaging device 1 calculates corrected storage signals (Qa1# to Qa4#). The range imaging device 1 calculates the corrected storage signals (Qa1# to Qa4#) by normalizing the external light-subtracted storage signals Qa1 to Qa4 according to the number of accumulation times N. For example, the range imaging device 1 normalizes the external light-subtracted storage signals Qa1 to Qa4 by dividing them by a value corresponding to the number of accumulation times N, as shown in Equation (4), thereby calculating the corrected storage signals (Qa1# to Qa4#).

Step S13: The range imaging device 1 calculates a distance to a subject OB based on the corrected storage signals (Qa1# to Qa4#).

Step S14: The range imaging device 1 determines whether the drive executed in the frame period is a drive provided with a non-storage time Ts.

Step S15: If the drive includes a non-storage time Ts, the range imaging device 1 corrects the distance calculated in step S13 according to the non-storage time Ts.

As described above, the range imaging device 1 according to the present embodiment is equipped with the light source unit 2, the light receiving unit 3, and the distance image processing unit 4. The light source unit 2 irradiates a subject OB with a light pulse PO. The light receiving unit 3 is equipped with the pixels 321 each equipped with the photoelectric conversion element PD and the plurality of charge storage elements CS, and the control circuit 322 (serving as the pixel drive circuit). The photoelectric conversion element PD generates electric charge, corresponding to the incident light. The charge storage element CS stores the charge therein. The vertical scanning circuit 323 distributes and stores charge to each charge storage element CS at a storage timing synchronized with the irradiation of the light pulse PO by the frame period. The range image processing unit 4 controls the control circuit 322 (serving as the pixel drive circuit) to store charge in each of the charge storage elements CS. The range image processing unit 4 calculates a distance D to the subject OB based on the amounts of charges stored in each charge storage element CS. The range image processing unit 4 provides multiple drive patterns. As a result of driving the multiple drive patterns, it ensures that the charge storage element CS with a smaller storage delay time receives fewer light receptions than the charge storage element CS with a larger storage delay time. The number of light receptions is the number of times charge is stored in the respective charge storage elements CS in the reflected light reception interval.

This allows the range imaging device 1 of the present embodiment to control the charge storage time (serving as the exposure time A) of the pixels 321 that receive the reflected light RL from closer-range objects to be shorter. Consequently, the number of times the reflected light RL from closer-range objects is received by the pixels 321 that are waiting for receiving the reflected light RL from farther-range objects can be reduced. Consequently, it becomes possible to more accurately measure distances to farther-range objects.

Furthermore, in the range imaging device 1 according to the present embodiment, in the first drive pattern among the plurality of drive patterns, electric charge is stored in each of the plurality of N (N ≥ 2) charge storage elements CS. In the second drive pattern, the electric charge is stored in M (M < N) charge storage elements CS. Furthermore, in the first drive pattern, the first charge storage element CS, which has the smallest storage delay time, does not store charge in the second drive pattern.

Thus, in the range imaging device 1 according to the present embodiment, the time (serving as the exposure time A), during which the pixels 321 receiving the reflected light RL from closer-range objects store charge, can be controlled to be shorter, thus achieving effects similar to those described above.

Additionally, in the range imaging device 1 according to the present embodiment, the storage timing of the charge storage element CS1 (serving as the first charge storage element) with the smallest storage delay time is set to a timing after a predetermined non-storage time Ts has elapsed from the irradiation timing.

Thus, in the range imaging device 1 of the embodiment, the number of times the reflected light RL arriving from closer-range objects is received by the pixels 321 receiving the reflected light RL arriving from farther-range objects can be reduced, thereby achieving the same effect as described above.

In addition, in the second drive pattern driven by the range imaging device 1 according to the present embodiment, charge is stored in the charge storage element CS1 (serving as the first charge storage element), which did not store charge during the reflected light reception interval, during a time interval which is different from the reflected light reception interval. In this case, for each of the plural drive patterns, the sum of the first number of times and the second number of times is made equal to the third number of times after the charge has been stored in the charge storage elements CS. The first number of times is the number of times charge is stored in the charge storage element CS1 (serving as the first charge storage element) during the reflected light reception interval. The second number of times is the number of times charge is stored in the charge storage element CS1 (serving as the first charge storage element) during a time interval different from the reflected light reception interval. The third number of times is the number of times charge is stored in the charge storage element CS4 (serving as the second charge storage element) during the reflected light reception interval.

By this configuration, the range imaging device 1 according to the present embodiment is able to reduce the number of times the pixels 321, which are waiting for receiving the reflected light RL arriving from farther-range objects, and receive the reflected light RL arriving from closer-range objects, while also simplifying the processing for calculating distance.

Furthermore, in the range imaging device 1 according to the present embodiment, the external light storage drive pattern is provided which stores charge corresponding only to the external light, without irradiating an additional light pulse PO after multiple drive patterns. Moreover, in the external light storage drive pattern, charge is stored in the charge storage element CS1 (serving as the first charge storage element) that did not store charge in the second drive pattern. The storage timing for the first charge storage element in the external light storage drive pattern is set to occur after the reflected light reception time Tth has elapsed from the irradiation timing of the last drive pattern among the plurality of drive patterns.

This improves the signal-to-noise ratio (SNR) of the storage signals, thereby enabling enhanced accuracy in measuring the distances D to the subjects OB. Alternatively, it allows for precise measurement of subjects with rapid motion.

The range imaging device 1 and range image processing unit 4 in the above-described embodiments may be implemented entirely or partially by a computer. In such a case, this functionality may be realized by recording programs for implementing this functionality on a computer-readable recording medium, loading the programs recorded on this medium into a computer system, and executing the programs. It is noted that the term "computer system" here includes hardware such as an OS and peripheral devices. The "computer-readable recording medium" refers to storage devices such as portable media (e.g., floppy disks, magneto-optical disks, ROM, CD-ROM) or internal storage devices (e.g., hard disks) within a computer system. In addition, the "computer-readable recording media" may also include media that dynamically hold programs for a short time, such as communication lines when transmitting programs via networks like the Internet or communication lines like telephone lines, as well as media that hold programs for a certain period, such as volatile memory within the computer system acting as a server or client in such cases. Moreover, the aforementioned programs may be one that realizes only part of the previously described functions. The recording media may also be one that realizes the previously described functions in combination with programs already recorded in the computer system. Furthermore the recording media may also be one realized using programmable logic devices such as FPGAs.

The foregoing description has detailed the embodiments of the present invention with reference to the drawings. However, the specific configurations are not limited to these embodiments and include designs and other elements that do not depart from the essence of the present invention.

Partial Reference Signs List

| | |
|---|---|
| 1 | Range imaging Device |
| 2 | Light Source Unit |
| 3 | Light Receiving Unit |
| 32 | Range Image Sensor |
| 321 | Pixel (Pixel Circuit) |
| 4 | Range Image Processing Unit |
| 42 | Range Calculation Unit |
| CS | Charge Storage Unit |
| PO | Light Pulse |
| RL | Reflected Light |

**Claims**

1. A range imaging device, comprising:

   a light source unit irradiating a light pulse to a subject;
   a light receiving unit comprising pixels and a pixel drive circuit, the pixels including photoelectric conversion elements configured to generate charge depending on incident light and a plurality of charge storage elements each storing the charge, the pixel drive circuit configured to distribute and store the charge in each of the charge storage elements at a storage timing which is synchronized with an irradiation timing at which the light pulse is irradiated; and
   a range image processing unit configured to control the pixel drive circuit to store the charge in each of the charge storage elements and calculate a distance to the subject based on amounts of the charge stored in each of the charge storage elements,

wherein the range image processing unit configured to

store the charge in each of the charge storage elements based on a plurality of drive patterns, the charge storage elements storing the charge therein being different in number from each other among the drive patterns, and perform processing such that, in the charge storage elements in which the charge is stored in accordance with the plurality of drive patterns, the charge storage elements whose storage delay time is smaller become smaller in the number of light receptions than the charge storage elements whose storage delay time is larger, the storage delay time being a difference between the irradiation timing and the storage timing,

wherein the number of light receptions is the number of times the charge is stored into the charge storage elements during a reflected light reception interval from the irradiation timing to timing at which a reflected light reception time elapses, the reflected light reception time being a time corresponding to a measurable distance.

2. The range imaging device according to claim 1, wherein the range image processing unit is configured to:

store the charge into each of, among the charge storage elements, N (N≧2) charge storage elements in a first drive pattern belonging to the plurality of the drive patterns,

store the charge into, among the charge storage elements, M (M□N) charge storage elements in a second drive pattern belonging to the plurality of the drive patterns, and

avoid storing the charge in the second drive pattern into a first charge storage elements, the first charge storage elements being defined as the charge storage elements whose acceleration delay time is the least in the first drive pattern.

3. The range imaging device according to claim 2, wherein the range image processing unit is configured to set the storage timing for the first charge storage elements at a timing which is later than a predetermined non-storage time elapsing from the irradiation timing.

4. The range imaging device according to claim 2 or 3, wherein the range image processing unit is configured to

store, in the second drive pattern, the charge into the first charge storage elements during a time interval different from the reflected light reception interval, and

set such that, in the charge storage elements in which the charges are stored in accordance with the plurality of drive patterns, a sum of both the first number of times the charge is stored in the first charge storage elements during the reflected light reception interval and the second number of times the charge is stored in the first charge storage elements during a time interval different from the reflected light reception interval is made to be equal to the third number of times the charge is stored in second charge storage elements of the charge storage elements, the second charge storage elements being different from the first charge storage elements.

5. The range imaging device according to claim 2 or 3, comprising:

an external light storage drive pattern which follows the plurality of drive patterns, only charge corresponding to an external light being stored in a state where the light pulse is avoided from being irradiated,

wherein, in the external light storage drive pattern, the charge is stored in the first charge storage elements in which the charge is avoided from being stored in the second drive pattern, and

the storage timing for the first charge storage elements in the external light storage drive pattern is later than a timing at which the reflected light reception time elapses from the irradiation timing of a last drive pattern among the plurality of drive patterns.

6. A range imaging method, which is performed by a range imaging device comprising:

a light source unit irradiating a light pulse to a subject;

a light receiving unit comprising pixels and a pixel drive circuit, the pixels including photoelectric conversion elements configured to generate charge depending on incident light and a plurality of charge storage elements each storing the charge, the pixel drive circuit configured to distribute and store the charge in each of the charge storage elements at a storage timing which is synchronized with an irradiation timing at which the light pulse is irradiated; and

a range image processing unit configured to control the pixel drive circuit to store the charge in each of the charge storage elements and calculate a distance to the subject based on amounts of the charge stored in each of the charge storage elements,

wherein the range image processing unit

stores the charge in each of the charge storage elements based on a plurality of drive patterns, the charge storage elements storing the charge therein being different in number from each other among the drive patterns, and performs processing such that, in the charge storage elements in which the charge is stored in accordance with the plurality of drive patterns, the charge storage elements whose storage delay time is smaller become smaller in the number of light receptions than the charge storage elements whose storage delay time is larger, the storage delay time being a difference between the irradiation timing and the storage timing,

wherein the number of light receptions is the number of times the charge is stored into the charge storage elements during a reflected light reception interval from the irradiation timing to timing at which

a reflected light reception time elapses, the reflected light reception time being a time corresponding to a measurable distance.

FIG.1

EP 4 760 354 A1

# FIG.2

323 · · · · · · · · · · · · · · · · · · · · · · · · · · · · · · · · · · · · · · · 32

VERTICAL SCANNING CIRCUIT

320

321

CONTROL CIRCUIT

PIXEL SIGNAL PROCESSING CIRCUIT · · · · 325

HORIZONTAL SCANNING CIRCUIT · · · · 324

322

# FIG.3

# FIG.4

FRAME PERIOD

READING INTERVAL

STORAGE INTERVAL

CYCLE PERIOD

FIRST DRIVE PATTERN  SECOND DRIVE PATTERN  THIRD DRIVE PATTERN  FOURTH DRIVE PATTERN

LI

G1

G2

G3

G4

GD

EP 4 760 354 A1

# FIG.5

FRAME PERIOD

READING INTERVAL

STORAGE INTERVAL

CYCLE PERIOD

FIRST DRIVE PATTERN

SECOND DRIVE PATTERN

THIRD DRIVE PATTERN

FOURTH DRIVE PATTERN

LI

Ts

G1

G2

G3

G4

GD

EP 4 760 354 A1

# FIG.6A

FRAME PERIOD

READING INTERVAL

STORAGE INTERVAL

CYCLE PERIOD

FIRST DRIVE PATTERN    SECOND DRIVE PATTERN    THIRD DRIVE PATTERN    FOURTH DRIVE PATTERN

LI

Tth

G1

G2

G3

G4

GD

EP 4 760 354 A1

# FIG.6B

FRAME PERIOD

READING INTERVAL

STORAGE INTERVAL

CYCLE PERIOD

FIFTH DRIVE PATTERN
(EXTERNAL LIGHT
STORAGE DRIVE
PATTERN)

FIRST DRIVE
PATTERN

SECOND DRIVE
PATTERN

THIRD DRIVE
PATTERN

FOURTH DRIVE
PATTERN

LI

Tth

G1

G2

G3

G4

GD

EP 4 760 354 A1

# FIG.6C

FRAME PERIOD

READING INTERVAL

STORAGE INTERVAL

CYCLE PERIOD

FOURTH DRIVE PATTERN
(EXTERNAL LIGHT
STORAGE DRIVE
PATTERN)

FIRST DRIVE
PATTERN

SECOND DRIVE
PATTERN

THIRD DRIVE
PATTERN

LI

Tth

G1

G2

G3

G4

GD

EP 4 760 354 A1

FIG.7A

# FIG.7B

FRAME PERIOD

READING INTERVAL

STORAGE INTERVAL

CYCLE PERIOD

FIFTH DRIVE PATTERN
(EXTERNAL LIGHT
STORAGE DRIVE
PATTERN)

FIRST DRIVE
PATTERN

SECOND DRIVE
PATTERN

THIRD DRIVE
PATTERN

FOURTH DRIVE
PATTERN

LI

Tth

Ts          Ts          Ts          Ts

G1

G2

G3

G4

GD

EP 4 760 354 A1

# FIG.8

START

READ OUT THE STORAGE
SIGNAL VALUES (Q1 TO Q4) — S10

CALCULATE EXTERNAL
LIGHT-SUBTRACTED
STORAGE SIGNALS
(Qa1 TO Qa4) BY SUBTRACTING
EXTERNAL LIGHT SIGNAL QB FROM
STORAGE SIGNAL VALUES
(Q1 TO Q4) — S11

NORMALIZE EXTERNAL
LIGHT-SUBTRACTED
STORAGE SIGNALS
(Qa1 TO Qa4) TO
CALCULATE CORRECTED
STORAGE SIGNALS
(Qa1# TO Qa4#) WHICH ARE
NORMALIZED ACCORDING TO
THE NUMBER OF STORING TIMES — S12

CALCULATE DISTANCES USING
CORRECTED STORAGE
SIGNALS (Qa1# TO Qa4#) — S13

S14
IS IT
A DRIVE WITH
NON-STORAGE
TIME Ts ?

YES

CORRECT DISTANCES ACCORDING
TO NON-STORAGE TIME Ts — S15

NO

END

## INTERNATIONAL SEARCH REPORT

| International application No. |
| --- |
| **PCT/JP2024/027735** |

### A. CLASSIFICATION OF SUBJECT MATTER

*G01S 17/894*(2020.01)i
FI: G01S17/894

According to International Patent Classification (IPC) or to both national classification and IPC

### B. FIELDS SEARCHED

Minimum documentation searched (classification system followed by classification symbols)

G01S7/48-7/51; G01S17/00-17/95

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/078366 A1 (NATIONAL UNIVERSITY CORPORATION SHIZUOKA UNIVERSITY) 25 April 2019 (2019-04-25)<br>paragraphs [0012]-[0014], [0079]-[0080], fig. 1, 14 | 1-6 |
| A | JP 2022-176579 A (TOPPAN PRINTING CO., LTD.) 30 November 2022 (2022-11-30)<br>entire text, all drawings | 1-6 |
| A | WO 2022/158536 A1 (TOPPAN PRINTING CO., LTD.) 28 July 2022 (2022-07-28)<br>entire text, all drawings | 1-6 |
| A | US 2019/0204446 A1 (SONY SEMICONDUCTOR SOLUTIONS CORPORATION) 04 July 2019 (2019-07-04)<br>entire text, all drawings | 1-6 |

☐ Further documents are listed in the continuation of Box C.　　☑ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 August 2024** | **10 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/027735**

| Patent document cited in search report | | | Publication date (day/month/year) | Patent family member(s) | | | Publication date (day/month/year) |
|---|---|---|---|---|---|---|---|
| WO | 2019/078366 | A1 | 25 April 2019 | US | 2020/0278194 | A1 | |
| | | | | paragraphs [0029]-[0031], [0097]-[0098], fig. 1, 14 | | | |
| JP | 2022-176579 | A | 30 November 2022 | (Family: none) | | | |
| WO | 2022/158536 | A1 | 28 July 2022 | US | 2023/0366990 | A1 | |
| US | 2019/0204446 | A1 | 04 July 2019 | CN | 109996015 | A | |

Form PCT/ISA/210 (patent family annex) (July 2022)

**REFERENCES CITED IN THE DESCRIPTION**

**Patent documents cited in the description**

- JP 2023129765 A
- JP 4235729 B